(19) Europäisches Patentamt / European Patent Office / Office européen des brevets

(11) **EP 4 411 409 A2**

(12) **EUROPEAN PATENT APPLICATION**

(43) Date of publication:
    **07.08.2024  Bulletin 2024/32**

(21) Application number: **24183387.0**

(22) Date of filing: **27.01.2022**

(51) International Patent Classification (IPC):
    **G01S 5/02** *(2010.01)*

(52) Cooperative Patent Classification (CPC):
    **G01S 1/042; G01S 5/0205; H04W 64/00;**
    G01S 5/0018; G01S 5/0244

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**

(30) Priority:  **31.03.2021   GR 20210100220**

(62) Document number(s) of the earlier application(s) in
    accordance with Art. 76 EPC:
    **22704469.0 / 4 314 855**

(71) Applicant: **QUALCOMM Incorporated
    San Diego, CA 92121-1714 (US)**

(72) Inventors:
    • **HOSSEINI, Seyedkianoush
      San Diego, 92121-1714 (US)**
    • **MANOLAKOS, Alexandros
      San Diego, 92121-1714 (US)**
    • **DUAN, Weimin
      San Diego, 92121-1714 (US)**

(74) Representative: **Attfield, Andrew John
    Reddie & Grose LLP
    10 Whitechapel High Street
    London E1 8QS (GB)**

Remarks:
    This application was filed on 20-06-2024 as a
    divisional application to the application mentioned
    under INID code 62.

(54)    **ANCHOR USER EQUIPMENT SELECTION FOR POSITIONING**

(57)    An anchor UE may move or have a low transmission power and impact the accuracy of positioning estimates of a target UE based on measurements of the PRSs associated with the anchor UE. One or more candidate anchor UEs may be selected or excluded from being used for positioning based on one or more of a measurement quality metric of a position measurement of a candidate anchor UE, a mobility status of the candidate anchor UE, or a CDOP associated with the candidate anchor UE. A mobility status of the candidate anchor UE may be derived from reported positions of the candidate anchor UE or obtained from the candidate anchor UE. A UE selected as an anchor UE is used for positioning of a target UE, and a UE downselected from being an anchor UE is excluded from use for positioning of the target UE.

700 —

Obtain, from one or more of a plurality of candidate anchor user equipments (UEs), one or more position measurements and a measurement quality metric of each of the one or more position measurements of the candidate anchor UE. — 702

Select at least one candidate anchor UE from the plurality of candidate anchor UEs for positioning of the target UE based on the one or more measurement quality metrics from the one or more candidate anchor UEs. — 704

*FIG. 7*

EP 4 411 409 A2

**Description**

**BACKGROUND**

Field:

Subject matter disclosed herein relates to positioning of user equipment using received positioning reference signals and more particularly to selection of anchor user equipment to be used for positioning.

Information:

The location of a user equipment (UE), such as a cellular telephone, may be useful or essential to a number of applications including emergency calls, navigation, direction finding, asset tracking and Internet service. The location of a UE may be estimated based on information gathered from various systems. In a cellular network implemented according to 4G (also referred to as Fourth Generation) Long Term Evolution (LTE) radio access or 5G (also referred to as Fifth Generation) "New Radio" (NR), for example, a base station may transmit downlink reference signals or a UE may transmit sidelink reference signals that are used for positioning, such as a positioning reference signal (PRS). Assistance data is sent to a UE to assist in acquiring and measuring signals, and in some implementations, to compute a location estimate from the measurements. A UE may acquire PRSs transmitted from different base stations or UEs and perform positioning measurements such as Reference Signal Time Difference (RSTD), Reference Signal Received Power (RSRP), and reception and transmission (RX-TX) time difference measurements, which may be used in various positioning methods, such as Time Difference of Arrival (TDOA), Angle of Departure (AoD), and multi-cell Round Trip Time (RTT). The UE may compute an estimate of its own location using various positioning methods or may send the positioning measurements to a network entity, e.g., location server, which may compute the UE location based on the positioning measurements. Improvements in accuracy in positioning are desirable.

**SUMMARY**

An anchor user equipment (UE) as a transmit/receive point (TRP) to transmit and/or receive positioning reference signals (PRSs) may move or have a lower transmission power compared to other UEs and may impact the accuracy of positioning estimates of a target UE based on measurements of the PRSs associated with the anchor UE. One or more candidate anchor UEs may be excluded from being used for positioning of one or more other UEs based on one or more of a measurement quality metric for a position measurement of a candidate anchor UE, a mobility status of the candidate anchor UE, or a geometric dilution of precision (GDOP) associated with the candidate anchor UE. The measurement quality metric may be based on reference signal time differences (RSTDs) or an accuracy of a satellite system or other sensors used to determine the candidate anchor UE's position. A mobility status of the candidate anchor UE may be derived from reported positions of the candidate anchor UE or obtained from the candidate anchor UE. A candidate anchor UE that is selected as an anchor UE is used for positioning of a target UE. In some implementations of selecting one or more candidate anchor UEs from a group of candidate anchor UEs, a candidate anchor UE may be excluded from a group of candidate anchor UEs for a target UE when the group is downselected. In this manner, the candidate anchor UE is excluded from use as an anchor UE for positioning of the target UE.

In one implementation, a method of selecting an anchor UE for positioning of a target UE in a wireless network includes: obtaining, from one or more of a plurality of candidate anchor UEs, one or more position measurements and a measurement quality metric of each of the one or more position measurements of the candidate anchor UE; and selecting the plurality of candidate anchor UEs for positioning of the target UE based on the one or more measurement quality metrics from the one or more candidate anchor UEs.

In one implementation, a device configured for selecting an anchor UE for positioning of a target UE in a wireless network includes at least one transceiver, at least one memory, and at least one processor coupled to the at least one transceiver and the at least one memory. The at least one processor is configured to cause the device to: obtain, via the at least one transceiver and from one or more of a plurality of candidate anchor UEs, one or more position measurements and a measurement quality metric of each of the one or more position measurements of the candidate anchor UE; and select, via the at least one processor, the plurality of candidate anchor UEs for positioning of the target UE based on the one or more measurement quality metrics from the one or more candidate anchor UEs.

In one implementation, a non-transitory computer-readable medium includes instructions that, when executed by at least one processor of a device configured for selecting an anchor user equipment (UE) for positioning of a target UE in a wireless network, cause the device to: obtain, via at least one transceiver and from one or more of a plurality of candidate anchor UEs, one or more position measurements and a measurement quality metric of each of the one or more position measurements of the candidate anchor UE; and select, via the at least one processor, the plurality of candidate anchor UEs for positioning of the target UE based on the one or more measurement quality metrics from the one or more candidate anchor UEs.

In one implementation, a device configured for selecting an anchor UE for positioning of a target UE in a wireless network includes: means for obtaining, from one or more of a plurality of candidate anchor UEs, one or more position measurements and a measurement quality metric of each of the one or more position measurements of the candidate anchor UE; and means for selecting the plurality of candidate anchor UEs for positioning of the target UE based on the one or more measurement quality metrics from the one or more candidate anchor UEs.

In one implementation, a method of selecting an anchor UE for positioning [please change "wireless positioning" to "positioning"] of a target UE in a wireless network includes: determining, for one or more of a plurality of candidate anchor UEs, a mobility status of the candidate anchor UE; and selecting the plurality of candidate anchor UEs for positioning of the target UE based on the one or more mobility statuses.

In one implementation, a device configured for selecting an anchor UE for positioning of a target UE in a wireless network includes at least one transceiver, at least one memory, and at least one processor coupled to the at least one transceiver and the at least one memory. The at least one processor is configured to cause the device to: determine, via one or more of the at least one transceiver or the at least one processor and for one or more of a plurality of candidate anchor UEs, a mobility status of the candidate anchor UE; and select, via the at least one processor, the plurality of candidate anchor UEs for positioning of the target UE based on the one or more mobility statuses.

In one implementation, a non-transitory computer-readable medium includes instructions that, when executed by at least one processor of a device configured for selecting an anchor user equipment (UE) for positioning of a target UE in a wireless network, cause the device to: determine, via one or more of at least one transceiver or the at least one processor and for one or more of a plurality of candidate anchor UEs, a mobility status of the candidate anchor UE; and select, via the at least one processor, the plurality of candidate anchor UEs for positioning of the target UE based on the one or more mobility statuses.

In one implementation, a device configured for selecting an anchor user equipment (UE) for positioning of a target UE in a wireless network includes: means for determining, for one or more of a plurality of candidate anchor UEs, a mobility status of the candidate anchor UE; and means for selecting the plurality of candidate anchor UEs for positioning of the target UE based on the one or more mobility statuses.

In one implementation, a method of selecting an anchor UE for positioning of a target UE in a wireless network includes selecting one or more anchor UEs for positioning of the target UE from a plurality of candidate anchor UEs, wherein the selection is based on a plurality of GDOPs, wherein each GDOP is determined by the target UE for a different combination of candidate anchor UEs from the plurality of candidate anchor UEs.

In one implementation, a device configured for selecting an anchor UE for positioning of a target UE in a wireless network includes at least one transceiver, at least one memory, and at least one processor coupled to the at least one transceiver and the at least one memory. The at least one processor is configured to cause the device to select, via one or more of the at least one transceiver or the at least one processor, one or more anchor UEs for positioning of the target UE from a plurality of candidate anchor UEs, wherein the selection is based on a plurality of GDOPs, wherein each GDOP is to be determined by the target UE for a different combination of candidate anchor UEs from the plurality of candidate anchor UEs.

In one implementation, a non-transitory computer-readable medium includes instructions that, when executed by at least one processor of a device configured for selecting an anchor user equipment (UE) for positioning of a target UE in a wireless network, cause the device to select, via one or more of at least one transceiver or the at least one processor, one or more anchor UEs for positioning of the target UE from a plurality of candidate anchor UEs, wherein the selection is based on a plurality of GDOPs, wherein each GDOP is to be determined by the target UE for a different combination of candidate anchor UEs from the plurality of candidate anchor UEs.

In one implementation, a device configured for selecting an anchor user equipment (UE) for positioning of a target UE in a wireless network includes means for selecting one or more anchor UEs for positioning of the target UE from a plurality of candidate anchor UEs, wherein the selection is based on a plurality of GDOPs, wherein each GDOP is to be determined by the target UE for a different combination of candidate anchor UEs from the plurality of candidate anchor UEs.

Other objects and advantages associated with the aspects disclosed herein will be apparent to those skilled in the art based on the accompanying drawings and detailed description.

## BRIEF DESCRIPTION OF THE DRAWINGS

The accompanying drawings are presented to aid in the description of various aspects of the disclosure and are provided solely for illustration of the aspects and not limitation thereof.

FIG. 1 illustrates an exemplary wireless communications system, according to various aspects of the disclosure.

FIG. 2 illustrates a block diagram of a design of base station and user equipment (UE), which may be one of the base stations and one of the UEs in FIG. 1.

FIG. 3 illustrates a UE capable of supporting positioning services in a wireless network.

FIG. 4 illustrates a base station capable of supporting positioning services in a wireless network.

FIG. 5 illustrates a server capable of supporting positioning services in a wireless network.

FIG. 6 is a diagram illustrating an exemplary technique for determining a position of a mobile device using information obtained from a plurality of base stations.

FIG. 7 shows a flowchart for an exemplary method for selecting an anchor UE for positioning of a target UE in a wireless network.

FIG. 8 shows a flowchart for an exemplary method for selecting an anchor UE for positioning of a target UE in a wireless network.

FIG. 9A is a diagram illustrating a first position uncertainty for a UE associated with two transmit-receive points (TRPs) for positioning.

FIG. 9B is a diagram illustrating a second position uncertainty for the UE associated with two TRPs for positioning.

FIG. 10 shows a flowchart for an exemplary method for selecting an anchor UE for positioning of a target UE in a wireless network.

FIG. 11 shows a flowchart for an exemplary method for selecting an anchor UE for positioning of a target UE in a wireless network.

## DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular Radio Access Technology (RAT), unless otherwise noted. In general, a UE may be any wireless communication device (e.g., a mobile phone, router, tablet computer, laptop computer, tracking device, wearable (e.g.,

smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a Radio Access Network (RAN). As used herein, the term "UE" may be referred to interchangeably as an "access terminal" or "AT," a "client device," a "wireless device," a "subscriber device," a "subscriber terminal," a "subscriber station," a "user terminal" or UT, a "mobile terminal," a "mobile station," a "mobile device," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the IEEE 802.11 set of standards, etc.) and so on.

A base station may operate according to one of several RATs in communication with UEs depending on the network in which it is deployed, and may be alternatively referred to as an access point (AP), a network node, a NodeB, an evolved NodeB (eNB), a New Radio (NR) Node B (also referred to as a gNodeB or gNB), etc. In addition, in some systems a base station may provide purely edge node signaling functions while in other systems it may provide additional control and/or network management functions. A communication link through which UEs can send signals to a base station is called an uplink (UL) channel or reverse link channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). A communication link through which UEs can send signals to or from each other is called a sidelink (SL). As used herein the term traffic channel (TCH) can refer to either an UL / reverse or DL / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). In some implementations, a TRP may be a UE.

To support positioning of a UE, two broad classes of positioning solutions have been defined: control plane based and user plane based. With reference to control plane (CP) positioning, signaling related to positioning and support of positioning may be carried over existing network (and UE) interfaces and using existing protocols dedicated to the transfer of signaling. With reference to user plane (UP) positioning, signaling related to positioning and support of positioning may be carried as part of other data using such protocols as the Internet Protocol (IP), Transmission Control Protocol (TCP) and User Datagram Protocol (UDP).

The Third Generation Partnership Project (3GPP) has defined control plane positioning solutions for UEs that use radio access according to Global System for Mobile communications GSM (2G), Universal Mobile Telecommunications System (UMTS) (3G), LTE (4G) and New Radio (NR) for Fifth Generation (5G). These solutions are defined in 3GPP Technical Specifications (TSs) 23.271 and 23.273 (common parts), 43.059 (GSM access), 25.305 (UMTS access), 36.305 (LTE access) and 38.305 (NR access). For UP positioning, release 16 of the 3GPP standard for NR defines multi-cell round trip time (RTT), DL angle of departure (AOD), and UL angle of arrival (AOA) with zenith and azimuth. Release 16 also defines UE-based positioning associated with DL-TDOA and DL-AOD, DL-positioning reference signal (PRS) (DL-PRS), and sounding reference signal (SRS) for positioning. Release 16 also defines beam-specific (PRS) operation for mmWave and broadcasting of assistance data for positioning. Release 17 of the 3GPP standard for NR may define UE-initiated one-demand transmission of a DL-PRS, network-initiated on-demand transmission of a DL-PRS, Radio Resource Control (RRC) inactive DL-only, UL-only, or DL+UI, based positioning, access point (AP) DL-PRS transmission, and/or aggregation of DL-PRS across multiple frequencies. The Open Mobile Alliance (OMA) has similarly defined a UP positioning solution known as Secure User Plane Location (SUPL), which can be used to locate a UE accessing any of a number of radio interfaces that support IP packet access such as General Packet Radio Service (GPRS) with GSM, GPRS with UMTS, or IP access with LTE or NR.

Both CP and UP based positioning (also referred to as location) solutions may employ a location server to support positioning (location) of a UE. The location server may be part of or accessible from a serving network or a home network for a UE or may simply be accessible over the Internet or over a local Intranet. If positioning of a UE is needed, a location server may instigate a session (e.g. a location session or a SUPL session) with the UE and coordinate location measurements by the UE and determination of an estimated location of the UE. During a location session, a location server may request positioning capabilities of the UE (or the UE may provide them without a request), may provide assistance data to the UE (e.g. if requested by the UE or in the absence of a request) and may request a location estimate or location measurements from a UE for various positioning techniques, e.g. for the Global Navigation Satellite System (GNSS), Time Difference of Arrival (TDOA), Angle of Departure (AoD), Round Trip Time (RTT) or multi cell RTT (Multi-RTT), and/or Enhanced Cell ID (ECID) position methods. Assistance data may be used by a UE to acquire and measure GNSS and/or PRS signals (e.g. by providing expected characteristics of these signals such as frequency, expected time of arrival, signal coding, signal Doppler).

In a UE based mode of operation, assistance data may also or instead be used by a UE to help determine a location estimate from the resulting location measurements (e.g., if the assistance data provides satellite ephemeris data in the case of GNSS positioning or base station locations and other base station characteristics such as PRS timing in the case of terrestrial positioning using, e.g., TDOA, AoD, Multi-RTT, etc.).

In a UE assisted mode of operation, a UE may return location measurements to a location server which may determine an estimated location of the UE based on these measurements and possibly based also on other known or configured data (e.g. satellite ephemeris data for GNSS location or base station characteristics including base station locations and possibly PRS timing in the case of terrestrial positioning using, e.g., TDOA, AoD, Multi-RTT, etc.).

In another standalone mode of operation, a UE may make location related measurements without any positioning assistance data from a location server and may further compute a location or a change in location without any positioning assistance data from a location server. Position methods that may be used in a standalone mode include GPS or other types of a GNSS (e.g. if a UE obtains satellite orbital data from data broadcast by GPS or other GNSS satellites themselves) as well as sensors.

In the case of 3GPP CP location, a location server may be an enhanced serving mobile location center (E-SMLC) in the case of LTE access, a standalone SMLC (SAS) in the case of UMTS access, a serving mobile location center (SMLC) in the case of GSM access, or a Location Management Function (LMF) in the case of 5G NR access. In the case of OMA SUPL location, a location server may be a SUPL Location Platform (SLP) which may act as any of: (i) a home SLP (H-SLP) if in or associated with the home network of a UE or if providing a permanent subscription to a UE for location services; (ii) a discovered SLP (D-SLP) if in or associated with some other (non-home) network or if not associated with any network; (iii) an Emergency SLP (E-SLP) if supporting location for an emergency call instigated by the UE; or (iv) a visited SLP (V-SLP) if in or associated with a serving network or a current local area for a UE.

During a location session, a location server and UE may exchange messages defined according to some positioning protocol in order to coordinate the determination of an estimated location. Possible positioning protocols may include, for example, the LTE Positioning Protocol (LPP) defined by 3GPP in 3GPP TS 36.355 and the LPP Extensions (LPPe) protocol defined by OMA in OMA TSs OMA-TS-LPPe-V1_0, OMA-TS-LPPe-V1_1 and OMA-TS-LPPe-V2_0. The LPP and LPPe protocols may be used in combination where an LPP message contains one embedded LPPe message. The combined LPP and LPPe protocols may be referred to as LPP/LPPe. LPP and LPP/LPPe may be used to help support the 3GPP control plane solution for LTE or NR access, in which case LPP or LPP/LPPe messages are exchanged between a UE and E-SMLC or between a UE and LMF. LPP or LPPe messages may be exchanged between a UE and E-SMLC via a serving Mobility Management Entity (MME) and a serving eNodeB for the UE. LPP or LPPe messages may also be exchanged between a UE and LMF via a serving Access and Mobility Management Function (AMF) and a serving NR Node B (gNB) for the UE. LPP and LPP/LPPe may also be used to help support the OMA SUPL solution for many types of wireless access that support IP messaging (such as LTE, NR and WiFi), where LPP or LPP/LPPe messages are exchanged between a SUPL Enabled Terminal (SET), which is the term used for a UE with SUPL, and an SLP, and may be transported within SUPL messages such as a SUPL POS or SUPL POS INIT message

A location server and a base station (e.g. an eNodeB for LTE access) may exchange messages to enable the location server to (i) obtain position measurements for a particular UE from the base station, or (ii) obtain location information from the base station not related to a particular UE such as the location coordinates of an antenna for the base station, the cells (e.g. cell identities) supported by the base station, cell timing for the base station and/or parameters for signals transmitted by the base station such as PRS signals. In the case of LTE access, the LPP A (LPPa) protocol may be used to transfer such messages between a base station that is an eNodeB (eNB) and a location server that is an E-SMLC. In the case of NR access, the NRPPA protocol may be used to transfer such messages between a base station that is a gNodeB (gNB) and a location server that is an LMF. It is noted that the terms "parameter" and "information element" (IE) are synonymous and are used interchangeably herein.

During positioning using signaling in LTE and 5G NR, a UE typically acquires dedicated positioning signals transmitted by base stations, e.g., PRS, which are used to generate the desired measurements for the supported positioning technique. Positioning Reference Signals (PRS) are defined for 5G NR positioning to enable UEs to detect and measure more neighbor base stations or Transmission and Reception Points (TRPs). Downlink (DL) PRS from a reference base station and one or more neighboring stations. Based on the time of arrival (TOA) of the PRS from the reference and neighboring base stations, the UE may generate DL Reference Signal Time Difference (RSTD) for DL TDOA positioning, sometimes referred to as Observed Time Difference of Arrival (OTDOA). In a similar process, the UE may transmit uplink references signals for positioning, referred to as Sounding Reference Signals (SRS) for positioning to a reference base station and neighboring base stations. The TOAs of the SRS at the reference and neighboring stations may be used to generate an UL RSTD of UL TDOA positioning, sometimes referred to as Uplink Time Difference of Arrival (UTDOA).

As described above, a base station may be a transmit/receive point (TRP) to be used for UE positioning. In some scenarios, it may be advantageous for one or more TRPs to be a UE (which may be mobile within a network as compared to a base station that typically does not move). For example, base stations may provide PRSs over a UP interface (referred to as a Uu interface, such as a LTE-Uu or a NR-Uu). In a first scenario, a target UE for positioning is within range of a Uu interface for DL and is within range of the Uu interface for UL for at least one anchor base station. A UE may be used as a TRP (which may be referred to as an anchor for positioning) to assist with positioning. In this manner, an anchor UE may transmit and receive PRSs over a SL with the target UE. Additional anchors (such as additional anchor UEs or additional base stations) may be used to increase the number of TRPs to a sufficient number of positioning (e.g., two or three TRPs) or improve the accuracy of a location estimation. In a second scenario, a target UE is not in range of a Uu interface for DL or UL of any base station. Anchor UEs may be used to perform SL-only positioning. For example, a low power device (such as a wearable) may be withing range of multiple UEs but not a base station. The UEs may be used to perform SL-only positioning of the wearable. In a third scenario, a target UE is in range of a Uu interface for DL but not for UL of a base station. Anchor UEs may be used to assist with the UL portion (such as relaying information back to a base station or a location server). For example, a target UE with a limited transmission ability (such as a wearable or other lower power devices) may be able to receive on a DL from a base station but not transmit on an UL to the base station.

Support of SL only and/or SL assisted positioning is desirable. Since UEs may be mobile within the wireless network or UEs may have a lower transmit power than other UEs, some candidate anchor UEs may be better as anchors UEs than other candidate anchor UEs. As described herein, anchor UEs may be determined or excluded for one or more target UEs. Selection of one or more candidate anchor UEs may be based on one or more of: a measurement quality metric (such as a receive signal (RS) receive power (RSRP) metric or a signal to noise ratio (SNR) metric for positioning, an accuracy of a position measurement of the candidate anchor UE, etc.); a mobility status of the candidate anchor UE; or a geometric dilution of precision (GDOP) associated with the candidate anchor UE. For example, a subset of one or more candidate anchor UEs may be selected from a plurality of candidate anchor UEs as potential anchors of one or more target UEs. As used herein, selecting one or more candidate anchor UEs may refer to downselecting the plurality of candidate anchor UEs to exclude one or more candidate anchor UEs from being chosen as anchors for one or more target UEs. In this manner, selecting may refer to selecting a candidate anchor UE as an anchor, excluding the candidate anchor UE from being selected as an anchor, selecting a subset of candidate anchor UEs from a group of candidate anchor UEs, or downselecting the group of candidate anchor UEs to remove one or more candidate anchor UEs from consideration as anchors. Downselecting a candidate anchor UE may be used herein to refer to excluding the candidate anchor UE from consideration as an anchor. In one implementation, a device obtains, from one or more of a plurality of candidate anchor UEs, one or more position measurements and a measurement quality metric of each of the one or more position measurements of the candidate anchor UE. The device also selects the plurality of candidate anchor UEs for positioning of the target UE based on the one or more measurement quality metrics from the one or more candidate anchor UEs. In another implementation, a device determines, for one or more of a plurality of candidate anchor UEs, a mobility status of the candidate anchor UE. The device also selects the plurality of candidate anchor UEs for positioning of the target UE based on the one or more mobility statuses. In another implementation, a device selects one or more anchor UEs for positioning of the target UE from a plurality of candidate anchor UEs, wherein the selection is based on a plurality of GDOPs, wherein each GDOP is determined by the target UE for a different combination of candidate anchor UEs from the plurality of candidate anchor UEs. Selecting or excluding an anchor UE may be performed by a UE or a location server of a wireless network. As used herein, determining a GDOP may refer to estimating or calculating the GDOP in any suitable manner. While some examples describe determining the GDOP by the target UE, a GDOP may be determined (e.g., estimated or calculated) by a location server, a base station, or another suitable wireless network entity (such as for UE-assisted positioning of a target UE).

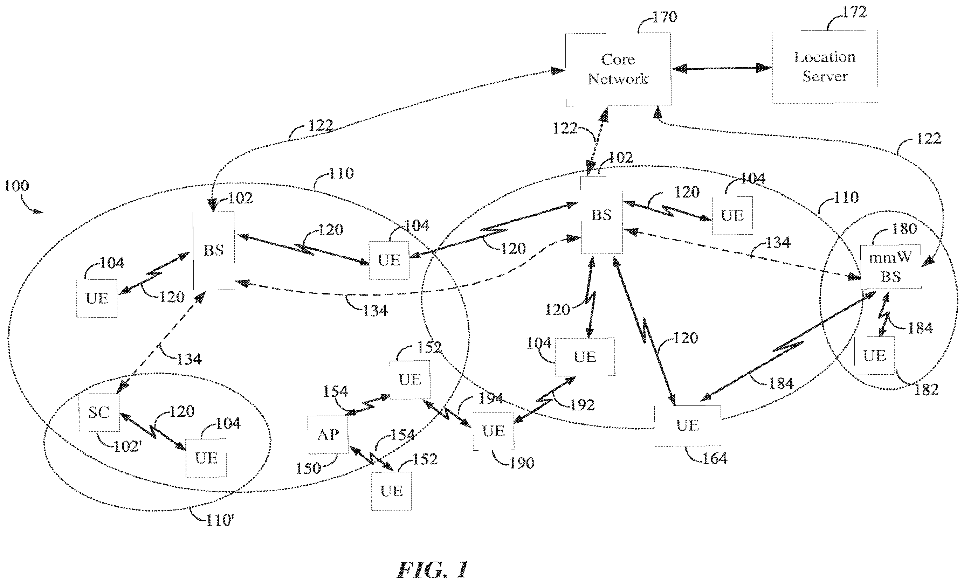

FIG. 1 illustrates an exemplary wireless communications system 100. The wireless communications system 100 (which may also be referred to as a wireless wide area network (WWAN) or a wireless network (e.g., a cellular network)) may include various base stations 102 and various UEs 104, which one or more of the base stations 102 and/or UEs 104 may sometimes be referred to herein as TRPs 102 or 104. The base stations 102 may include macro cell base stations (high power cellular base stations) and/or small cell base stations (low power cellular base stations). In an aspect, the macro cell base station may include eNBs where the wireless communications system 100 corresponds to an LTE network, or gNBs where the wireless communications system 100 corresponds to a 5G network, or a combination of both, and the small cell base stations may include femtocells, picocells, microcells, etc.

The base stations 102 may collectively form a RAN and interface with a core network 170 (e.g., an evolved packet core (EPC) or next generation core (NGC)) through backhaul links 122, and through the core network 170 to a location server 172, which may include one or more location servers. In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / NGC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each coverage area 110. A "cell" is a logical communication entity used for communication with a base station or UE (e.g., over some frequency resource, referred to as a carrier frequency, component carrier, carrier, band, or the like), and may be associated with an identifier (e.g., a physical cell identifier (PCID), a virtual cell identifier (VCID)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include UL (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to DL and UL (e.g., more or less carriers may be allocated for DL than for UL).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) prior to communicating in order to determine whether the channel is available.

The small cell base station 102' may operate in a licensed and/or an unlicensed frequency spectrum. When operating in an unlicensed frequency spectrum, the small cell base station 102' may employ LTE or 5G technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. LTE in an unlicensed spectrum may be referred to as LTE-unlicensed (LTE-U), licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), signal-to-noise ratio (SNR), etc.) of the RF signals received from that direction.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels. A secondary carrier is a carrier operating on a second frequency (e.g., FR2) that may be configured once the RRC connection is established between the UE 104 and the anchor carrier and that may be used to provide additional radio resources. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more sidelinks (SLs), such as device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth®, and so on. In the example, the UE 190 may be a relay UE between the UE 152 and a base station 102. One or multiple UEs may be relay UEs between a device and a base station.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

A target UE 104 for positioning may be within wireless range of one or more base stations 102 (which may be TRPs 102 for positioning of the target UE 104). Additionally or alternatively, the target UE 104 may be within wireless range of one or more other UEs 104 (which may be anchor UEs as TRPs 104 for positioning of the target UE 104). For example, the target UE 104 may be within a range of at least two or three devices capable of operating as a TRP. An anchor base station may transmit a PRS on a DL (DL-PRS) to one or more target UEs, and an anchor UE may transmit a PRS on a SL (SL-PRS) to one or more target UEs.

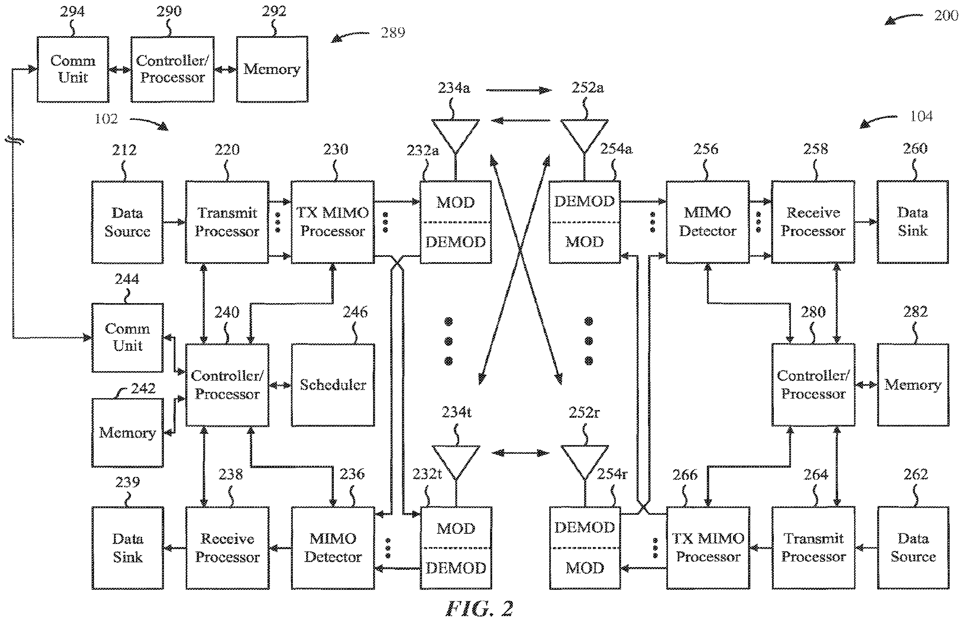

**FIG.** 2 shows a block diagram of a design 200 of base station 102 and UE 104, which may be one of the base stations and one of the UEs in FIG. 1. Base station 102 may be equipped with T antennas 234a through 234t, and UE 104 may be equipped with R antennas 252a through 252r, where in general $T \geq 1$ and $R \geq 1$.

At base station 102, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI) and/or the like) and control information (e.g., CQI requests, grants, upper layer signaling, and/or the like) and provide overhead symbols and control symbols. Transmit processor 220 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM and/or the like) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively. According to various aspects described in more detail below, the synchronization signals can be generated with location encoding to convey additional information.

At UE 104, antennas 252a through 252r may receive the downlink signals from base station 102 and/or other base stations and may provide received signals to demodulators (DEMODs) 254a through 254r, respectively. Each demodulator 254 may condition (e.g., filter, amplify, down convert, and digitize) a received signal to obtain input samples. Each demodulator 254 may further process the input samples (e.g., for OFDM and/or the like) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 104 to a data sink 260, and provide decoded control information and system information to a controller/processor 280. A channel processor may determine reference signal received power (RSRP), received signal strength indicator (RSSI), reference signal received quality (RSRQ), channel quality indicator (CQI), and/or the like. In some aspects, one or more components of UE 104 may be included in a housing.

On the uplink, at UE 104, a transmit processor 264 may receive and process data from a data source 262 and control information (e.g., for reports comprising RSRP, RSSI, RSRQ, CQI, and/or the like) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM, CP-OFDM, and/or the like), and transmitted to base station 102. At base station 102, the uplink signals from UE 104 and other UEs may be received by antennas 234, processed by demodulators, detected by a MIMO detector 236 if applicable, and further processed by a receive processor 238 to obtain decoded data and control information sent by UE 104. Receive processor 238 may provide the decoded data to a data sink 239 and the decoded control information to controller/processor 240. Base station 102 may include communication unit 244 and communicate to network controller 289 via communication unit 244. Network controller 289 may include communication unit 294, controller/processor 290, and memory 292.

Controller/processor 240 of base station 102, controller/processor 280 of UE 104, controller 290 of network controller 289, which may be location server 172, and/or any other component(s) of FIG. 2 may perform one or more techniques associated with supporting positioning services for a UE, as described in more detail elsewhere herein. For example, controller/processor 240 of base station 102, controller 290 of network controller 289, controller/processor 280 of LTE 104, and/or any other component(s) of FIG. 2 may perform or direct operations of, for example, the processes depicted in the Figures and as described herein. Memories 242, 282, and 292 may store data and program codes for base station 102, UE 104, and network controller 289, respectively. In some aspects, memory 242 and/or memory 282 and/or memory292 may comprise a non-transitory computer-readable medium storing one or more instructions for wireless communication. For example, the one or more instructions, when executed by one or more processors of base station 102, network controller 289, and/or the UE 104 may perform or direct operations of the processes described herein. A scheduler 246 may schedule UEs for data transmission on the downlink and/or uplink.

The location server 172 (which may include the network controller 289) may be configured to downselect or select the TRPs (including one or more anchor UEs) for positioning, determine and indicate the resources to be used for positioning (such as specific RS resources or formats of the PRSs), determine a position of one or more UEs in the wireless network, store positioning information for the one or more UEs, or perform other operations associated with positioning of one or more UEs in the wireless network. The positioning information may be used for various operations, such as cell selection, handover, beamforming, or locationing or other aspects of a wireless network 100.

As indicated above, FIG. 2 is provided as an example. Other examples may differ from what is described with regard to FIG. 2. For example, while FIG. 2 depicts communication between a base station 102 and a UE 104, communications may occur between two UEs 104 over a sidelink. In this manner, a UE 104 design and another UE 104 design as depicted in FIG. 2 may communicate with each other over a sidelink. A UE in the example may be a target UE, a candidate anchor UE, or an anchor UE (e.g., a selected UE to be a TRP) for positioning.

A base station or a UE may broadcast, unicast, or groupcast one or more PRSs in a wireless network (such as in a cellular network including LTE technologies and/or 5G technologies). In a frequency domain, an available bandwidth may be divided into uniformly spaced orthogonal subcarriers (also referred to as "tones" or "bins"). For example, for a normal length cyclic prefix (CP) using, for example, 15 kHz spacing, subcarriers may be grouped into a group of twelve (12) subcarriers. A resource of one OFDM symbol length in the time domain and one subcarrier in the frequency domain may be referred to as a resource element (RE). In the example, each grouping of 12 subcarriers and 14 OFDM symbols is termed a resource block (RB) and, in the example above, the number of subcarriers in the resource block may be written as $N_{SC}^{RB} = 12$. For a given channel bandwidth, the number of available resource blocks on each channel, which is also called the transmission bandwidth configuration, is indicated as $N_{RB}^{DL}$. For example, for a 3 MHz channel bandwidth in the above example, the number of available resource blocks on each channel is given by $N_{RB}^{DL} = 15$. Note that the frequency component of a resource block (e.g., the 12 subcarriers) is referred to as a physical resource block (PRB).

A base station may transmit radio frames, or other physical layer signaling sequences, supporting PRS signals (i.e., a downlink (DL) PRS) according to frame configurations similar to the above example, which may be measured and used for a target UE position estimation. A UE may transmit radio frames, or other physical layer signaling sequences, supporting PRS signals (i.e., a sidelink (SL) PRS) according to similar or different frame configurations than the above example, which may also be measured and used for a target UE position estimation. Other types of wireless nodes (e.g., a distributed antenna system (DAS), remote radio head (RRH), AP, etc.) in a wireless network may also be configured to transmit PRSs configured in a manner similar to (or the same as) described above.

A collection of resource elements that are used for transmission of PRS signals is referred to as a "PRS resource." The collection of resource elements can span multiple PRBs in the frequency domain and N (e.g., 1 or more) consecutive symbol(s) within a slot in the time domain. A "PRS resource set" is a set of PRS resources used for the transmission of PRS signals, where each PRS resource has a PRS resource identifier (ID). In addition, the PRS resources in a PRS resource set are associated with the same TRP. A PRS resource ID in a PRS resource set is associated with a single beam transmitted from a single TRP (where a TRP may transmit one or more beams). Note that this does not have any implications on whether the TRPs and beams from which signals are transmitted are known to the UE.

A PRS may be transmitted in special positioning subframes that are grouped into positioning occasions. A PRS occasion is one instance of a periodically repeated time window (e.g., consecutive slot(s)) where PRSs are expected to be transmitted. Each periodically repeated time window can include a group of one or more consecutive PRS occasions. Each PRS occasion can include a number $N_{PRS}$ of consecutive positioning subframes. The PRS positioning occasions for a cell supported by a base station or a UE may occur periodically at intervals. Multiple PRS occasions may be associated with the same PRS resource configuration, in which case, each such occasion is referred to as an "occasion of the PRS resource" or the like.

A PRS may be transmitted with a constant power. A PRS can also be transmitted with zero power (i.e., muted). Muting, which turns off a regularly scheduled PRS transmission, may be useful when PRS signals between different cells overlap by occurring at the same or almost the same time. In this case, the PRS signals from some cells may be muted while PRS signals from other cells are transmitted (e.g., at a constant power). Muting may aid signal acquisition and time of arrival (TOA) and reference signal time difference (RSTD) measurement, by UEs, of PRS signals that are not muted (by avoiding interference from PRS signals that have been muted). Muting may be viewed as the non-transmission of a PRS for a given positioning occasion for a particular cell. Muting patterns (also referred to as muting sequences) may be signaled (e.g., using the LTE positioning protocol (LPP)) to a UE using bit strings. For example, in a bit string signaled to indicate a muting pattern, if a bit at position $j$ is set to '0', then the UE may infer that the PRS is muted for a $j$th positioning occasion.

To further improve hearability of PRS, positioning subframes may be low-interference subframes that are transmitted without user data channels. As a result, in ideally synchronized networks, PRS may be interfered with by other cells' PRS with the same PRS pattern index (i.e., with the same frequency shift), but not from data transmissions. The frequency shift may be defined as a function of a PRS ID for a cell or other transmission point (TP) (denoted as $N_{ID}^{PRS}$) or as a function of a physical cell identifier (PCI) (denoted as $N_{ID}^{cell}$) if no PRS ID is assigned, which results in an effective frequency re-use factor of six (6).

To also improve hearability of a PRS (e.g., when PRS bandwidth is limited, such as with only six resource blocks corresponding to 1.4 MHz bandwidth), the frequency band for consecutive PRS positioning occasions (or consecutive PRS subframes) may be changed in a known and predictable manner via frequency hopping. In addition, a cell supported by a base station or a UE may support more than one PRS configuration, where each PRS configuration may comprise a distinct frequency offset (*vshift*), a distinct carrier frequency, a distinct bandwidth, a distinct code sequence, and/or a distinct sequence of PRS positioning occasions with a particular number of subframes ($N_{PRS}$) per positioning occasion and a particular periodicity ($T_{PRS}$). In some implementation, one or more of the PRS configurations supported in a cell may be for a directional PRS and may then have additional distinct characteristics, such as a distinct direction of transmission, a distinct range of horizontal angles, and/or a distinct range of vertical angles.

A PRS configuration, as described above, including the PRS transmission/muting schedule, is signaled to a UE to enable the UE to perform PRS positioning measurements. In this manner, the UE may not be expected to blindly perform detection of PRS configurations.

Similar to DL PRS transmitted by base stations, discussed above, a target UE may transmit UL PRS for positioning and/or SL PRS for positioning. A UL PRS may be, e.g., sounding reference signals (SRSs) for positioning. A SL PRS may be a signal similar to a SRS.

Using received DL PRS from base stations or SL PRS from anchor UEs, and/or UL PRS transmitted to base stations or SL PRS to anchor UEs, the target UE, an anchor UE, a base station (such as a gNB), or other devices of the wireless network may perform various positioning measurements (also referred to as position measurements). Other metrics that may be determined include one or more of: a measurement quality metric (which may indicate a quality of the positioning measurement of a UE or a signal quality, such as a RSRP metric or a SNR metric); a mobility status of an anchor UE; or a GDOP associated with a TRP.

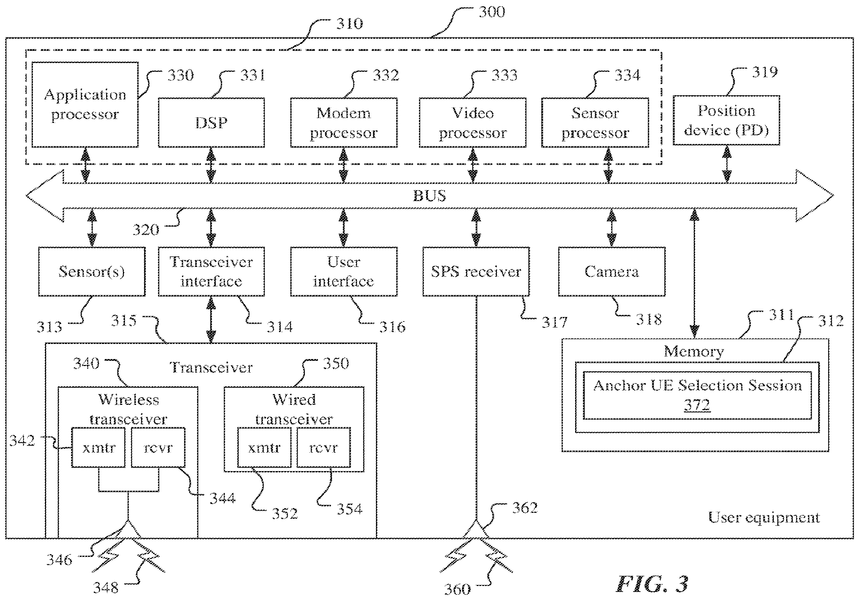

**FIG. 3** illustrates a UE 300, which is an example of the UE 104, capable of positioning services in a wireless network, such as the wireless network 100. The UE 300 includes a computing platform including at least one processor 310, memory 311 including software (SW) 312, one or more sensors 313, a transceiver interface 314 for a transceiver 315, a user interface 316, a Satellite Positioning System (SPS) receiver 317, a camera 318, and a position device (PD) 319. The processor 310, the memory 311, the sensor(s) 313, the transceiver interface 314, the user interface 316, the SPS receiver 317, the camera 318, and the position device 319 may be communicatively coupled to each other by a bus 320 (which may be configured, e.g., for optical and/or electrical communication). One or more of the shown apparatus (e.g., the camera 318, the SPS receiver 317, and/or one or more of the sensor(s) 313, etc.) may be omitted from the UE 300. The processor 310 may include one or more intelligent hardware devices, e.g., a central processing unit (CPU), a microcontroller, an application specific integrated circuit (ASIC), etc. The processor 310 may comprise multiple processors including an application processor 330, a Digital Signal Processor (DSP) 331, a modem processor 332, a video processor 333, and/or a sensor processor 334. One or more of the processors 330-334 may comprise multiple devices (e.g., multiple processors). For example, the sensor processor 334 may comprise, e.g., processors for radar, ultrasound, and/or lidar, etc. The modem processor 332 may support dual SIM/dual connectivity (or even more SIMs). For example, a SIM (Subscriber Identity Module or Subscriber Identification Module) may be used by an Original Equipment Manufacturer (OEM), and another SIM may be used by an end user of the UE 300 for connectivity. The memory 311 is a non-transitory storage medium that may include random access memory (RAM), flash memory, disc memory, and/or read-only memory (ROM), etc. The memory 311 stores the software 312 which may be processor-readable, processor-executable software code containing instructions that are configured to, when executed, cause the processor 310 to operate as a special purpose computer programmed to perform the various functions described herein. Alternatively, the software 312 may not be directly executable by the processor 310 but may be configured to cause the processor 310, e.g., when compiled and executed, to operate as a special purpose computer to perform the various functions described herein. The description may refer only to the processor 310 performing a function, but this includes other implementations such as where the processor 310 executes software and/or firmware. The description may refer to the processor 310 performing a function as shorthand for one or more of the processors 330-334 performing the function. The description may refer to the UE 300 performing a function as shorthand for one or more appropriate components of the UE 300 performing the function. The processor 310 may include a memory with stored instructions in addition to and/or instead of the memory 311.

The configuration of the UE 300 shown in FIG. 3 is an example and not limiting of the disclosure, including the claims, and other configurations may be used. For example, an example configuration of the UE includes one or more of the processors 330-334 of the processor 310, the memory 311, and the wireless transceiver 340. Other example configurations include one or more of the processors 330-334 of the processor 310, the memory 311, the wireless transceiver 340, and one or more of the sensor(s) 313, the user interface 316, the SPS receiver 317, the camera 318, the PD 319, and/or the wired transceiver 350.

The UE 300 may comprise the modem processor 332 that may be capable of performing baseband processing of signals received and down-converted by the transceiver 315 and/or the SPS receiver 317. The modem processor 332 may perform baseband processing of signals to be upconverted for transmission by the transceiver 315. Also or alternatively, baseband processing may be performed by the processor 330 and/or the DSP 331. Other configurations, however, may be used to perform baseband processing.

The UE 300 may include the sensor(s) 313 that may include, for example, one or more of various types of sensors such as one or more inertial sensors, one or more barometric pressure sensors, one or more magnetometers, one or more environment sensors, one or more optical sensors, one or more weight sensors, and/or one or more radio frequency (RF) sensors, etc. An inertial measurement unit (IMU) may comprise, for example, one or more accelerometers (e.g., collectively responding to acceleration of the UE 300 in three dimensions) and/or one or more gyroscopes capable of detecting motion including rotation of the UE 300. The sensor(s) 313 may include one or more magnetometers to determine orientation (e.g., relative to magnetic north and/or true north) that may be used for any of a variety of purposes, e.g., to support one or more compass applications. The environment sensor(s) may comprise, for example, one or more temperature sensors, one or more barometric pressure sensors, one or more ambient light sensors, one or more camera imagers, and/or one or more microphones, etc. The sensor(s) 313 may generate analog and/or digital signals indications of which may be stored in the memory 311 and processed by the DSP 331 and/or the processor 330 in support of one or more applications such as, for example, applications directed to positioning and/or navigation operations.

The sensor(s) 313 may be used in relative location measurements, relative location determination, motion determination, etc. Information detected by the sensor(s) 313 may be used for motion detection, relative displacement, dead reckoning, sensor-based location determination, and/or sensor-assisted location determination. The sensor(s) 313 may be useful to determine whether the UE 300 is fixed (stationary) or mobile including rotating and/or whether to report certain useful information regarding the mobility of the UE 300. For example, based on the information obtained/measured by the sensor(s), the UE 300 may notify/report that the UE 300 has detected movements or that the UE 300 has moved, and report the relative displacement/distance (e.g., via dead reckoning, or sensor-based location determination, or sensor-assisted location determination enabled by the sensor(s) 313). In another example, for relative positioning information, the sensors/IMU can be used to determine the angle and/or orientation of another device with respect to the UE 300, etc.

The IMU may be configured to provide measurements about a direction of motion and/or a speed of motion of the UE 300, which may be used in relative location determination. For example, one or more accelerometers and/or one or more gyroscopes of the IMU may detect, respectively, a linear acceleration and a speed of rotation of the UE 300. The linear acceleration and speed of rotation measurements of the UE 300 may be integrated over time to determine an instantaneous direction of motion as well as a displacement of the UE 300. The instantaneous direction of motion and the displacement may be integrated to track a location of the UE 300. For example, a reference location of the UE 300 may be determined, e.g., using the SPS receiver 317 (and/or by some other means) for a moment in time and measurements from the accelerometer(s) and gyroscope(s) taken after this moment in time may be used in dead reckoning to determine present location of the UE 300 based on movement (direction and distance) of the UE 300 relative to the reference location.

The magnetometer(s) may determine magnetic field strengths in different directions which may be used to determine orientation of the UE 300. For example, the orientation may be used to provide a digital compass for the UE 300. The magnetometer may be a two-dimensional magnetometer configured to detect and provide indications of magnetic field strength in two orthogonal dimensions. Alternatively, the magnetometer may be a three-dimensional magnetometer configured to detect and provide indications of magnetic field strength in three orthogonal dimensions. The magnetometer may provide means for sensing a magnetic field and providing indications of the magnetic field, e.g., to the processor 310.

The barometric pressure sensors(s) may determine air pressure, which may be used to determine the elevation or current floor level in a building of the UE 300. For example, a differential pressure reading may be used to detect when the UE 300 has changed floor levels as well as the number of floors that have changed. The barometric pressure sensors(s) may provide means for sensing air pressure and providing indications of the air pressure, e.g., to the processor 310.

The transceiver 315 may include one or both of a wireless transceiver 340 or a wired transceiver 350 configured to communicate with other devices through wireless connections and wired connections, respectively. For example, the wireless transceiver 340 may include a transmitter 342 and receiver 344 coupled to one or more antennas 346 for transmitting (e.g., on one or more uplink channels and/or one or more sidelink channels) and/or receiving (e.g., on one or more downlink channels and/or one or more sidelink channels) wireless signals 348. In some implementations, the wireless signals 348 may be transduced to wired (e.g., electrical and/or optical) signals and from wired (e.g., electrical and/or optical) signals, and the wired signals may be transduced to the wireless signals 348. Thus, the transmitter 342 may include multiple transmitters that may be discrete components or combined/integrated components, and/or the receiver 344 may include multiple receivers that may be discrete components or combined/integrated components. The wireless transceiver 340 may be configured to communicate signals (e.g., with TRPs and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 6GPP LTE-V2X (PC5), IEEE 802.11 (including IEEE 802.11p), WiFi, WiFi Direct (WiFi-D), Bluetooth®, Zigbee etc. New Radio may use mm-wave frequencies and/or sub-6GHz frequencies. If the UE 300 is to include a wired transceiver, the wired transceiver 350 may include a transmitter 352 and a receiver 354 configured for wired communication. The transmitter 352 may include multiple transmitters that may be discrete components or combined/integrated components, and/or the receiver 354 may include multiple receivers that may be discrete components or combined/integrated components. The wired transceiver 350 may be configured, e.g., for optical communication and/or electrical communication. The transceiver 315 may be communicatively coupled to the transceiver interface 314, e.g., by optical and/or electrical connection. The transceiver interface 314 may be at least partially integrated with the transceiver 315.

The antennas 346 may include an antenna array. The antenna array may be capable of transmit beamforming or receive beamforming, e.g., by increasing the gain setting and/or adjust the phase setting of an array of antennas in a particular direction to amplify (e.g., to increase the gain level of) the RF signals received from that direction. The antennas 346 may further include a plurality of antenna panels, wherein each antenna panel is capable of beamforming. The antennas 346 are capable of adaptation, e.g., selection of one or more antennas for controlling receiving transmitted beams from a base station. A reduced number of beams or a single beam, for example, may be selected for reception of a wide angle beam, e.g., to reduce power consumption, while an increased number of antennas in an antenna array may be selected when the transmit beam is relatively narrow.

The user interface 316 may comprise one or more of several devices such as, for example, a speaker, microphone, display device, vibration device, keyboard, touch screen, etc. The user interface 316 may include more than one of any of these devices. The user interface 316 may be configured to enable a user to interact with one or more applications hosted by the UE 300. For example, the user interface 316 may store indications of analog and/or digital signals in the memory 311 to be processed by DSP 331 and/or the processor 330 in response to action from a user. Similarly, applications hosted on the UE 300 may store indications of analog and/or digital signals in the memory 311 to present an output signal to a user. The user interface 316 may include an audio input/output (I/O) device comprising, for example, a speaker, a microphone, digital-to-analog circuitry, analog-to-digital circuitry, an amplifier and/or gain control circuitry (including more than one of any of these devices). Other configurations of an audio I/O device may be used. Also or alternatively, the user interface 316 may comprise one or more touch sensors responsive to touching and/or pressure, e.g., on a keyboard and/or touch screen of the user interface 316.

The SPS receiver 317 (e.g., a Global Positioning System (GPS) receiver or other Global Navigation Satellite System (GNSS) receiver) may be capable of receiving and acquiring SPS signals 360 via an SPS antenna 362. The antenna 362 is configured to transduce the wireless signals 360 to wired signals, e.g., electrical or optical signals, and may be integrated with the antenna 346. The SPS receiver 317 may be configured to process, in whole or in part, the acquired SPS signals 360 for estimating a location of the UE 300. For example, the SPS receiver 317 may be configured to determine location of the UE 300 by trilateration/multilateration using the SPS signals 360. The processor 330, the memory 311, the DSP 331, the PD 319 and/or one or more additional specialized processors (not shown) may be utilized to process acquired SPS signals, in whole or in part, and/or to calculate an estimated location of the UE 300, in conjunction with the SPS receiver 317. The memory 311 may store indications (e.g., measurements) of the SPS signals 360 and/or other signals (e.g., signals acquired from the wireless transceiver 340) for use in performing positioning operations. The general-purpose processor 330, the DSP 331, the PD 319, and/or one or more additional specialized processors, and/or the memory 311 may provide or support a location engine for use in processing measurements to estimate a location of the UE 300.

The UE 300 may include the camera 318 for capturing still or moving imagery. The camera 318 may comprise, for example, an imaging sensor (e.g., a charge coupled device or a CMOS imager), a lens, analog-to-digital circuitry, frame buffers, etc. Additional processing, conditioning, encoding, and/or compression of signals representing captured images may be performed by the general-purpose processor 330 and/or the DSP 331. Also or alternatively, the video processor 333 may perform conditioning, encoding, compression, and/or manipulation of signals representing captured images. The video processor 333 may decode/decompress stored image data for presentation on a display device (not shown), e.g., of the user interface 316.

The position device (PD) 319 may be configured to determine a position of the UE 300, motion of the UE 300, and/or relative position of the UE 300, and/or time. For example, the PD 319 may communicate with, and/or include some or all of, the SPS receiver 317 and the wireless transceiver 340. The PD 319 may work in conjunction with the processor 310 and the memory 311 as appropriate to perform at least a portion of one or more positioning methods, although the description herein may refer only to the PD 319 of the processor 310 being configured to perform, or performing, in accordance with the positioning method(s). The PD 319 may also or alternatively be configured to determine a location of the UE 300 using terrestrial-based signals (e.g., at least some of the signals 348) for trilateration/multilateration, for assistance with obtaining and using the SPS signals 360, or both. The PD 319 may be configured to use one or more other techniques (e.g., relying on the UE's self-reported location (e.g., part of the UE's position beacon)) for determining the location of the UE 300, and may use a combination of techniques (e.g., SPS and terrestrial positioning signals) to determine the location of the UE 300. The PD 319 may include one or more of the sensors 313 (e.g., gyroscope(s), accelerometer(s), magnetometer(s), etc.) that may sense orientation and/or motion of the UE 300 and provide indications thereof that the processor 310 (e.g., the processor 330 and/or the DSP 331) may be configured to use to determine motion (e.g., a velocity vector and/or an acceleration vector) of the UE 300. The PD 319 may be configured to provide indications of uncertainty and/or error in the determined position and/or motion.

The memory 311 may store software 312 that contains executable program code or software instructions that when executed by the processor 310 may cause the processor 310 to operate as a special purpose computer programmed to perform the functions disclosed herein. As illustrated, the memory 311 may include one or more components or modules that may be implemented by the processor 310 to perform the disclosed functions. While the components or modules are illustrated as software 312 in memory 311 that is executable by the processor 310, it should be understood that the components or modules may be stored in another computer readable medium or may be dedicated hardware either in the processor 310 or off the processor. A number of software modules and data tables may reside in the memory 311 and be utilized by the processor 310 in order to manage both communications and the functionality described herein. It should be appreciated that the organization of the contents of the memory 311 as shown is merely exemplary, and as such the functionality of the modules and/or data structures may be combined, separated, and/or be structured in different ways depending upon the implementation.

The memory 311, for example, may include an anchor UE selection session module 372 that when implemented by the one or more processors 310 configures the one or more processors 310 to engage in a session to be used for determining whether the UE 300 or another UE is to be used for positioning, which may be UE based positioning or UE assisted positioning, as described herein. For example, the one or more processors 310 may be configured to determine a measurement quality metric (such as an RSRP, an SNR, an accuracy of a position estimate) or a mobility status or motion metric of the UE 300, and the measurement quality metric or the mobility status may be used to select or exclude the UE 300 from being used as a TRP or to select the UE 300 as a TRP for positioning. A GDOP also may be determined or may be used for downselecting or selecting. While the anchor UE selection session module 372 is depicted as being software included in memory 311, the anchor UE selection session module 372 may be a hardware module, a software module, or a combination of hardware and software. For example, the module may include one or more application specific integrated circuits (ASICs), executable code, or a combination of both.

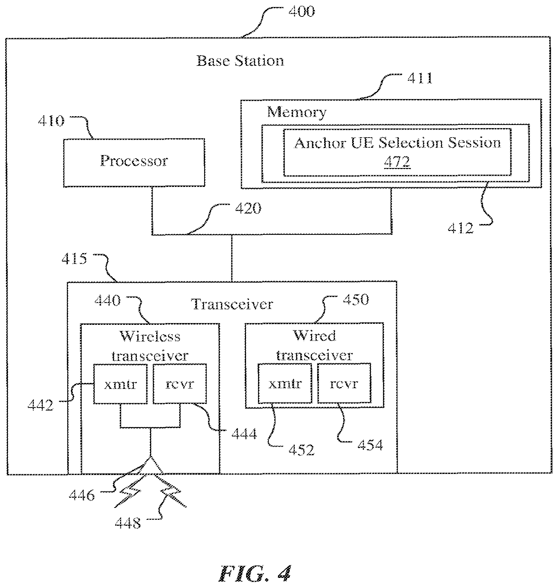

FIG. 4 illustrates a base station 400, which is an example of the base station 102, capable of supporting positioning services in a wireless network (such as wireless network 100). The base station 400 includes a computing platform including at least one processor 410, a memory 411 including software (SW) 412, and a transceiver 415. The processor 410, the memory 411, and the transceiver 415 may be communicatively coupled to each other by a bus 420 (which may be configured, e.g., for optical and/or electrical communication). One or more of the shown apparatus may be omitted from the base station 400, or the base station 400 may include one or more apparatus not shown. The processor 410 may include one or more intelligent hardware devices, e.g., a central processing unit (CPU), a microcontroller, an application specific integrated circuit (ASIC), etc. The processor 410 may comprise multiple processors (e.g., including one or more of an application processor, a DSP, a modem processor, a video processor, and/or a sensor processor, similar to that shown in FIG. 3). The memory 411 is a non-transitory storage medium that may include random access memory (RAM)), flash memory, disc memory, and/or read-only memory (ROM), etc. The memory 411 stores the software 412 which may be processor-readable, processor-executable software code containing instructions that are configured to, when executed, cause the processor 410 to operate as a special purpose computer programmed to perform the various functions described herein. Alternatively, the software 412 may not be directly executable by the processor 410 but may be configured to cause the processor 410, e.g., when compiled and executed, to operate as a special purpose computer to perform the various functions described herein. The description may refer only to the processor 410 performing a function, but this includes other implementations such as where the processor 410 executes software and/or firmware. The description may refer to the processor 410 performing a function as shorthand for one or more of the processors contained in the processor 410 performing the function. The description may refer to the base station 400 performing a function as shorthand for one or more appropriate components of the base station 400 performing the function. The processor 410 may include a memory with stored instructions in addition to and/or instead of the memory 411.

The transceiver 415 may include a wireless transceiver 440 and a wired transceiver 450 configured to communicate with other devices through wireless connections and wired connections, respectively. For example, the wireless transceiver 440 may include a transmitter 442 and receiver 444 coupled to one or more antennas 446 for transmitting and/or receiving (e.g., on one or more uplink channels and/or one or more downlink channels) wireless signals 448 and transducing signals from the wireless signals 448 to wired (e.g., electrical and/or optical) signals and from wired (e.g., electrical and/or optical) signals to the wireless signals 448. The antenna 446 is one or more antenna arrays capable of beam forming and transmitting and receiving beams, including beams used in transmitting or receiving signals (including PRSs) for positioning services. Also or alternatively, signals may be transmitted omnidirectionally. The transmitter 442 may include multiple transmitters that may be discrete components or combined/integrated components, and/or the receiver 444 may include multiple receivers that may be discrete components or combined/integrated components. The wireless transceiver 440 may be configured to communicate signals (e.g., with the UE 300, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 6GPP LTE-V2X (PC5), IEEE 802.11 (including IEEE 802.11p), WiFi, WiFi Direct (WiFi-D), Bluetooth®, Zigbee etc. The wired transceiver 450 may include a transmitter 452 and a receiver 454 configured for wired communication, e.g., to send communications to, and receive communications from, the location server 172. The transmitter 452 may include multiple transmitters that may be discrete components or combined/integrated components, and/or the receiver 454 may include multiple receivers that may be discrete components or combined/integrated components. The wired transceiver 450 may be configured, e.g., for optical communication and/or electrical communication.

The configuration of the base station 400 shown in FIG. 4 is an example and not limiting of the disclosure, including the claims, and other configurations may be used. For example, the description herein discusses that the base station 400 is configured to perform or performs several functions, but one or more of these functions may be performed by the location server 172 and/or the UE 300.

The memory 411 may store software 412 that contains executable program code or software instructions that when executed by the processor 410 may cause the processor 410 to operate as a special purpose computer programmed to perform the functions disclosed herein. As illustrated, the memory 411 may include one or more components or modules that may be implemented by the processor 410 to perform the disclosed functions. While the components or modules are illustrated as software 412 in memory 411 that is executable by the processor 410, it should be understood that the components or modules may be stored in another computer readable medium or may be dedicated hardware either in the processor 410 or off the processor. A number of software modules and data tables may reside in the memory 411 and be utilized by the processor 410 in order to manage both communications and the functionality described herein. It should be appreciated that the organization of the contents of the memory 411 as shown is merely exemplary, and as such the functionality of the modules and/or data structures may be combined, separated, and/or be structured in different ways depending upon the implementation.

The memory 411, for example, may include an anchor UE selection session module 472 that when implemented by the processor 410 configures the processor 410 to assist in the selection or downselection of one or more anchor UEs for positioning. For example, the one or more processors 410 may configure the base station 400 to relay information between a location server 172 and one or more candidate anchor UEs. While the anchor UE selection session module 472 is depicted as being software included in memory 411, the anchor UE selection session module 472 may be a hardware module, a software module, or a combination of hardware and software. For example, the module may include one or more application specific integrated circuits (ASICs), executable code, or a combination of both.

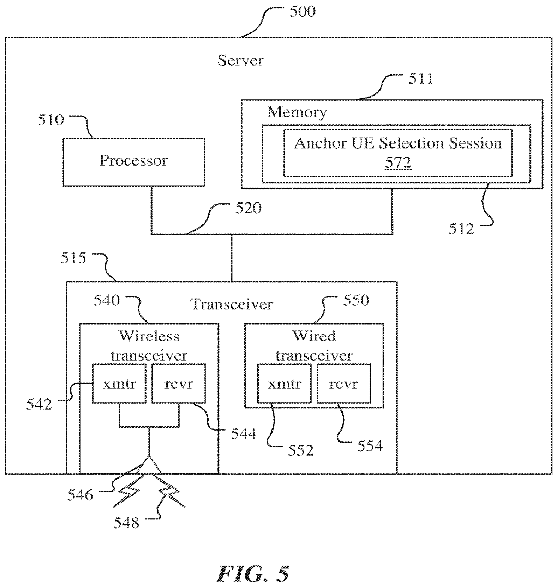

FIG. 5 shows a server 500, which is an example of the location server 172 capable of supporting positioning services in a wireless network (such as wireless network 100). The server 500 includes a computing platform including at least one processor 510, memory 511 including software (SW) 512, and a transceiver 515. The processor 510, the memory 511, and the transceiver 515 may be communicatively coupled to each other by a bus 520 (which may be configured, e.g., for optical and/or electrical communication). One or more of the shown apparatus (e.g., a wireless interface) may be omitted from the server 500. The processor 510 may include one or more intelligent hardware devices, e.g., a central processing unit (CPU), a microcontroller, an application specific integrated circuit (ASIC), etc. The processor 510 may comprise multiple processors (e.g., including at least one of an application processor, a DSP, a modem processor, a video processor, and/or a sensor processor, similar to that shown in FIG. 5). The memory 511 is a non-transitory storage medium that may include random access memory (RAM)), flash memory, disc memory, and/or read-only memory (ROM), etc. The memory 511 stores the software 512 which may be processor-readable, processor-executable software code containing instructions that are configured to, when executed, cause the processor 510 to operate as a special purpose computer programmed to perform the various functions described herein. Alternatively, the software 512 may not be directly executable by the processor 510 but may be configured to cause the processor 510, e.g., when compiled and executed, to operate as a special purpose computer to perform the various functions described herein. The description may refer only to the processor 510 performing a function, but this includes other implementations such as where the processor 510 executes software and/or firmware. The description may refer to the processor 510 performing a function as shorthand for one or more of the processors contained in the processor 510 performing the function. The description may refer to the server 500 performing a function as shorthand for one or more appropriate components of the server 500 performing the function. The processor 510 may include a memory with stored instructions in addition to and/or instead of the memory 511.

The transceiver 515 may include one or both of a wireless transceiver 540 or a wired transceiver 550 configured to communicate with other devices through wireless connections and wired connections, respectively. For example, the wireless transceiver 540 may include a transmitter 542 and receiver 544 coupled to one or more antennas 546 for transmitting (e.g., on one or more downlink channels) and/or receiving (e.g., on one or more uplink channels) wireless signals 548 and transducing signals from the wireless signals 548 to wired (e.g., electrical and/or optical) signals and from wired (e.g., electrical and/or optical) signals to the wireless signals 548. Thus, the transmitter 542 may include multiple transmitters that may be discrete components or combined/integrated components, and/or the receiver 544 may include multiple receivers that may be discrete components or combined/integrated components. The wireless transceiver 540 may be configured to communicate signals (e.g., with the base station 400 (such as a gNB), one or more other base stations, the UE 300, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 6GPP LTE-V2X (PC5), IEEE 802.11 (including IEEE 802.11p), WiFi, WiFi Direct (WiFi-D), Bluetooth®, Zigbee etc. The wired transceiver 550 may include a transmitter 552 and a receiver 554 configured for wired communication. The transmitter 552 may include multiple transmitters that may be discrete components or combined/integrated components, and/or the receiver 554 may include multiple receivers that may be discrete components or combined/integrated components. The wired transceiver 550 may be configured, e.g., for optical communication and/or electrical communication.

The configuration of the server 500 shown in FIG. 5 is an example and not limiting of the disclosure, including the claims, and other configurations may be used. For example, the wireless transceiver 540 may be omitted. Also or alternatively, the description herein discusses that the server 500 is configured to perform or performs several functions, but one or more of these functions may be performed by a base station 400 and/or a UE 300.

The memory 511 may store software 512 that contains executable program code or software instructions that when executed by the processor 510 may cause the processor 510 to operate as a special purpose computer programmed to perform the functions disclosed herein. As illustrated, the memory 511 may include one or more components or modules that may be implemented by the processor 510 to perform the disclosed functions. While the components or modules are illustrated as software 512 in memory 511 that is executable by the processor 510, it should be understood that the components or modules may be stored in another computer readable medium or may be dedicated hardware either in the processor 510 or off the processor. A number of software modules and data tables may reside in the memory 511 and be utilized by the processor 510 in order to manage both communications and the functionality described herein. It should be appreciated that the organization of the contents of the memory 511 as shown is merely exemplary, and as such the functionality of the modules and/or data structures may be combined, separated, and/or be structured in different ways depending upon the implementation.

The memory 511, for example, may include an anchor UE selection session module 572 that when implemented by the processor 510 configures the processor 510 to engage in supporting selection or downselection of one or more anchor UEs for positioning, as discussed herein. While the anchor UE selection session module 572 is depicted as being software included in memory 511, the anchor UE selection session module 572 may be a hardware module, a software module, or a combination of hardware and software. For example, the module may include one or more application specific integrated circuits (ASICs), executable code, or a combination of both.

For positioning, one or more anchors are used as TRPs to transmit and/or receive PRSs to/from a target UE. A distance between a TRP and the target UE may be based on an observed time difference of arrival (OTDOA) of one or more signals (referred to as OTDOA positioning) or any other suitable measurements used to determine distances for positioning. OTDOA positioning is based on a multilateration method in which a UE conventionally measures the time of arrival (TOA) of specific reference RF signals (e.g., PRS, CRS, CSI-RS, etc.) transmitted by different pairs of network nodes (e.g., base stations 102, antennas of base stations 102, other UEs 104, etc.). The TOA from several neighbors may be subtracted from a TOA from a reference node to determine the reference signal time differences (RSTDs) for the node pairs. As noted above, the time difference may be based on a reference signal (such as a PRS) being transmitted from an anchor to the UE, but a time difference may be based on a signal from the UE to an anchor or a round trip time (RTT) from the anchor back to the anchor or a neighboring device (with the UE relaying the PRS). RSTDs may be indicated to another device or otherwise used in determining a distance between an anchor and a UE. In some implementations, anchors (and similarly candidate anchors) or a target UE may measure a RSTD between instances of PRSs transmitted by other devices in the network. In some implementations, specific resources of a PRS may be used for measuring an RSTD. As used herein, a PRS resource may refer to any suitable portion or all of a PRS used for positioning.

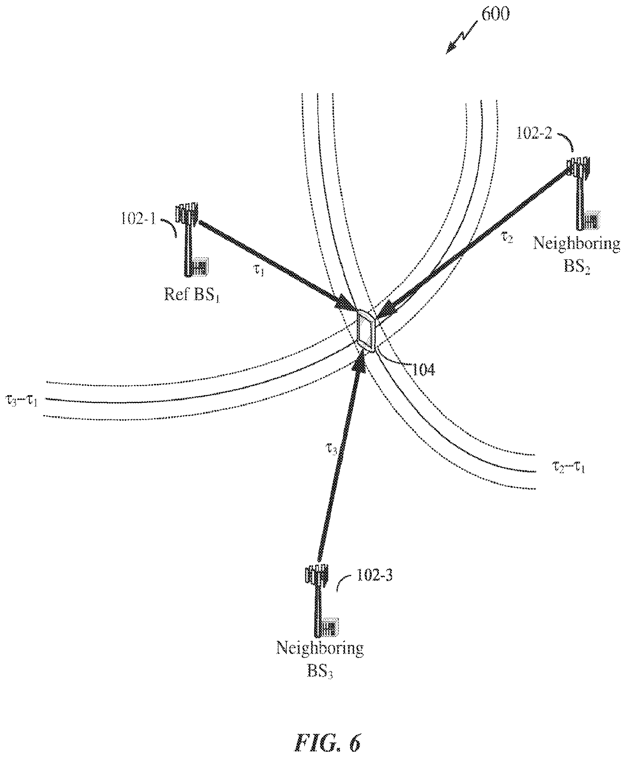

**FIG. 6** illustrates an exemplary wireless communications system 600 implementing positioning using a Time Difference of Arrival (TDOA) technique. In the example of FIG. 6, a UE 104 determines an estimate of its position, or assists another entity (e.g., a base station or core network component, another UE, a location server, a third party application, etc.) to determine an estimate of its position. The UE 104 may communicate wirelessly with a plurality of base stations 102-1, 102-2, and 102-3 (collectively, base stations 102), which may correspond to any combination of base stations 102 in FIG. 1, using RF signals and standardized protocols for the modulation of the RF signals and the exchange of information packets. By extracting different types of information from the exchanged RF signals, and utilizing the layout of the wireless communications system 600 (i.e., the base stations' locations, geometry, etc.), the UE 104 may determine its position, or assist in the determination of its position, in a predefined reference coordinate system. In an aspect, the UE 104 may specify its position using a two-dimensional coordinate system; however, the aspects disclosed herein are not so limited, and may also be applicable to determining positions using a three-dimensional coordinate system if the extra dimension is desired. Additionally, while FIG. 6 illustrates one UE 104 and three base stations 102, as will be appreciated, there may be more UEs 104 and more or fewer base stations 102 as anchors, or one or more anchors may be UEs 104 of the wireless network, as described herein. For example, any of the base stations 102-1 through 102-3 may be replaced with an anchor UE for positioning.

Generally, RSTDs are measured between a reference network node and one or more neighbor network nodes. In the example illustrated in FIG. 6, base station 102-1 may be the serving base station for UE 104 and may further serve as the reference base station, while base stations 102-2 and 102-3 serve as neighboring base stations. The reference network node remains the same for all RSTDs measured by the UE 104 for positioning using OTDOA and would typically correspond to the serving cell for the UE 104 or another nearby cell with good signal strength at the UE 104. In an aspect, where a measured network node is a cell supported by a base station, the neighbor network nodes would normally be cells supported by base stations different from the base station for the reference cell and may have good or poor signal strength at the UE 104. The RSTD may be the relative timing difference between two cells, e.g., the reference cell and the neighboring cell, which is determined based on the smallest time difference between two subframe boundaries from the two different cells.

The location computation can be based on the measured time differences (e.g., RSTDs) and knowledge of the network nodes' locations and relative transmission timing (e.g., regarding whether network nodes are accurately synchronized or whether each network node transmits with some known time difference relative to other network nodes).

To assist positioning operations, a location server 172 may provide OTDOA assistance data to the UE 104 for the reference network node (e.g., base station 102-1 in the example of FIG. 6 or an anchor UE in another example) and the neighbor network nodes (e.g., base stations 102-2 and 102-3 in the example of FIG. 6 or one or more other anchors, which may include an anchor UE, in another example) relative to the reference network node. For example, the assistance data may include base station and reference signal (e.g., PRS) configuration information and may provide the center channel frequency of each network node, various reference RF signal configuration parameters (e.g., the number of consecutive positioning subframes, periodicity of positioning subframes, muting sequence, frequency hopping sequence, reference RF signal ID, reference RF signal bandwidth), a network node global ID, and/or other cell related parameters applicable to OTDOA, as described above. The OTDOA assistance data may also indicate the serving cell for the UE 104 as the reference network node.

In an aspect, while the location server 172 may send the assistance data to the UE 104, alternatively, the assistance data can originate directly from the network nodes (e.g., base stations 102 or an anchor UE) themselves (e.g., in periodically broadcasted overhead messages, etc.). Alternatively, the UE 104 can detect neighbor network nodes itself without the use of assistance data.

In the example of FIG. 6, the measured time differences between the reference cell of base station 102-1 and the neighboring cells of base stations 102-2 and 102-3 are represented as $\tau_2$ - $\tau_1$ and $\tau_3$ - $\tau_1$, where $\tau_1$, $\tau_2$, and $\tau_3$ represent the transmission time of a reference RF signal from the transmitting antenna(s) of base station 102-1, 102-2, and 102-3, respectively, to the UE 104, and includes any measurement noise at the UE 104. The UE 104 may then convert the TOA measurements for different network nodes to RSTD measurements (e.g., as defined in 3GPP TS 36.214 entitled "Physical layer; Measurements"). Using (i) the RSTD measurements, (ii) the known absolute or relative transmission timing of each network node, (iii) the known position(s) of physical transmitting antennas for the reference and neighboring network nodes, and/or (iv) directional reference RF signal characteristics such as a direction of transmission, the UE's 104 position may be determined (either by the UE 104 or the location server 172).

The TOA $T_i$ at the UE 104 for the shortest path from base station $i$ is $T_i = \tau_i + \dfrac{D_i}{c}$, where $D_i$ is the Euclidean distance between the base stations $i$ with location ($q_i$) and the UE 104 with location ($p$), c is the speed of light in the air (299700 km/s), and $q_i$ is known through a cell information database (which may be included in the location server or another network component). The Euclidean distance (i.e., the line distance between two points) is given by equation (1) below:

$$c(T_i - \tau_i) = \sqrt{2}R\sqrt{1 - sin(\varphi_1)sin(\varphi_2) - cos(\varphi_1)cos(\varphi_2)cos(\beta_1 - \beta_2)}, \qquad (1)$$

where D is the distance between two points on the surface of the earth, R is the radius of the earth (6371 km), $\varphi_1$, $\varphi_2$ is the latitude (in radians) of the first point and the latitude (in radians) of the second point, respectively, and $\beta_1$, $\beta_2$ is the longitude (in radians) of the first point and the latitude (in radians) of the second point, respectively. If the anchor is a UE instead of a base station, $q_i$ may not be known for the anchor UE. In this manner, to determine the location of the UE 104 in FIG. 6 when an anchor is another UE, the anchor UE's location is to be determined.

In order to identify the TOA of a reference RF signal transmitted by a given network node, the UE 104 first jointly processes all the resource elements (REs) on the channel on which that network node (e.g., base station 102) is transmitting the reference RF signal, and performs an inverse Fourier transform to convert the received RF signals to the time domain. The conversion of the received RF signals to the time domain is referred to as estimation of the Channel Energy Response (CER). The CER shows the peaks on the channel over time, and the earliest "significant" peak should therefore correspond to the TOA of the reference RF signal. Generally, a UE will use a noise-related quality threshold to filter out spurious local peaks, thereby presumably correctly identifying significant peaks on the channel. For example, a UE 104 may choose a TOA estimate that is the earliest local maximum of the CER that is at least X dB higher than the median of the CER and a maximum Y dB lower than the main peak on the channel. The UE 104 determines the CER for each reference RF signal from each network node in order to determine the TOA of each reference RF signal from the different network nodes.

The TOA measurements performed by the UE 104 are related to the geometric distance between the UE 104 and the anchor (e.g., base station 102). In a 2-D Cartesian coordinate system, the (known) coordinates of a base station or the determined coordinates of an anchor UE may be denoted as $x_i=[x_i,y_i]^T$ and the (unknown) coordinates of the UE 104 may be denoted as $x_t=[x_t,y_t]^T$. The RSTD measurements may be defined as the time difference between two nodes (e.g., base stations) (modulo 1-subframe (1-ms)), and therefore, correspond to the range differences between a neighbor base station 102-i and the reference base station 102-1. A time difference between the neighboring base station 102-i and reference base station 102-1 measured at the UE 104 is provided in equation (2) below:

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1) \quad (2)$$

$(T_i-T_1)$ is the transmit time offset between the base stations, referred to as a "Real Time Differences" (RTDs). Variables $n_i$ and $n_1$ are the UE TOA measurement errors. Constant c is the speed of light.

At least two neighbor anchor (e.g., base station) measurements i may be needed, but more than two neighbor anchor measurements are desirable, and the system of equations may be solved in the least-squares, or weighted-least-squares sense. The transmit time offsets (Ti-T1) should (ideally) be zero in a synchronized network, and the equation above defines the TDOA. Geometrically, each TDOA defines a hyperbola, where the width of the hyperbola is determined by the TDOA errors (ni - n1) as shown in FIG. 6. If the base stations 102 coordinates and the transmit time offsets (Ti-T1) are known at the location server 172 or at the UE 104, the position of the UE 104 may be determined. Uncertainty in an anchor's coordinates or transmit time offsets will directly impact the accuracy of the UE location estimate.

Positioning may be UE-assisted or UE-based. With UE-assisted positioning, a server 500 (such as location server 172) may determine a location/position of a target UE. While a location server 172 is described as performing the operations for clarity, one or more other network entities in the wireless network may perform all or a portion of the described operations (e.g., a base station, a core network component, etc.). The location server 172 may also determine the RS resources to be used for positioning (such as specific PRS formats, frequencies, time windows, whether transmission of PRSs is triggered or periodic, etc.). The location server 172 may also select which base stations 102 are to be used as TRPs for positioning and settings for the TRP (such as which UEs are to be supported). The location server 172 may indicate the determined resources to the base stations 102 (such as gNBs), which may indicate the resources to UEs 104 or use the indication to transmit PRSs. As noted herein, one or more UEs 104 may be used as anchors for positioning. In some implementations, the location server 172 may downselect or select candidate anchor UEs to be used as anchor UEs for positioning. The downselection or selection may be based on a preference of anchor UEs from one or more target UEs. Alternatively, downselection or selection may be made independent of any preference from target UEs. As noted herein, downselection or selection may be based on one or more measurement qualities, one or more mobility statuses, or one or more GDOPs. With UE-based positioning, the target UE may determine its location/positioning based on measurements of PRSs performed and provided by other devices and/or measurements of PRSs performed by the target UE (such as from RSTDs as described above). The target UE (or the location server or another network entity) may downselect or select anchors for positioning (such as determining which PRSs from which devices or which measurements from devices to use for positioning). In some implementations, the target UE (or the location server or another network entity) may select or downselect candidate anchor UEs to be used as anchor UEs.

As noted above, one or more UEs may be used as anchors for positioning, with an anchor UE transmitting and/or receiving PRSs over a sidelink (such as a PC5 connection) and otherwise communicating with a target UE over the sidelink. In this manner, an anchor UE may operate as a TRP, similar to an anchor base station, for positioning. Accuracy of a location estimate of a target UE based on one or more anchor UEs depends on the accuracy of a determined location of the anchor UE. For example, referring back to equation (2) above, errors in the coordinates of an anchor UE causes errors in an estimated location of a target UE. Base stations (such as gNBs) may be static with their locations defined. However, a UE may move, and the UE's position is to be determined and used if the UE is to be an anchor UE.

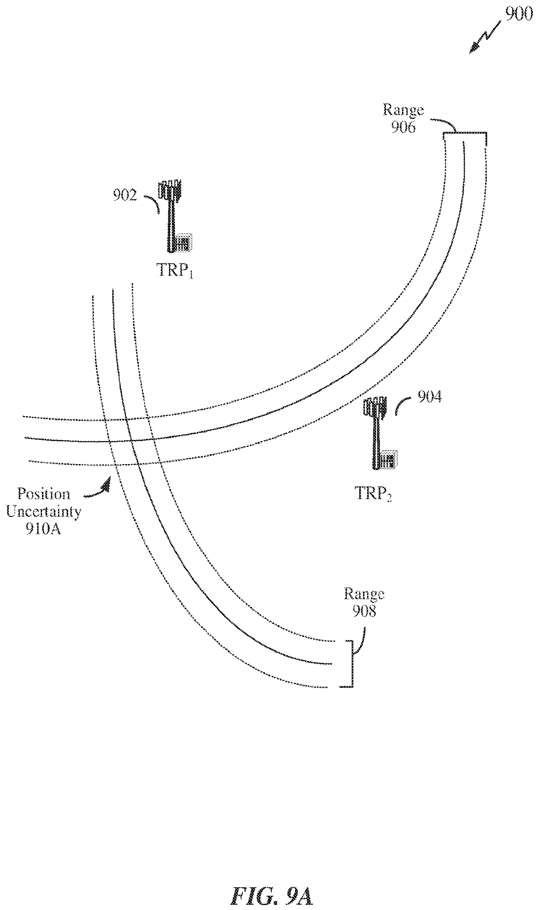

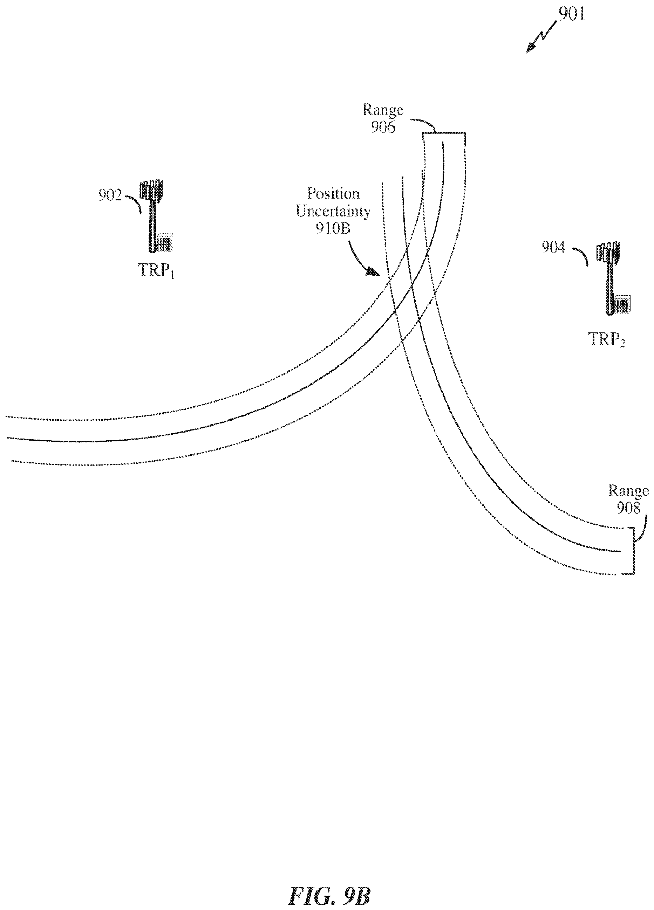

A transmission strength or other factors may also vary for an anchor UE. The accuracy in a determined position of the candidate anchor UE or the candidate anchor UE's suitability as an anchor may depend on a mobility of the UE, a transmission strength of the UE, or other factors. For example, a faster moving anchor UE may cause measurements associated with a PRS to/from the anchor UE (e.g., a RSTD) to become stale faster or may be associated with a higher doppler effect or interference. The location determined for the anchor UE also is to be updated and may have more errors or may be determined with less accuracy (thus affecting the accuracy of a location estimate for a target UE). In another example, a lower transmission power of or interference with PRSs at the anchor UE may cause a lower RSRP or SNR of the PRS, which may cause difficulties or inaccuracies in processing the PRS to determine a RSTD or other metric. In addition or to the alternative, an anchor UE (and other anchors) may be associated with a GDOP based on the location of the anchor UE and the locations of other anchors relative to a target UE. Anchor UEs associated with a smaller GDOP may be associated with a more accurate positioning determination of the target UE. In addition, a moving anchor UE causes the GDOP to change, which causes uncertainty in the accuracy of a location estimation. GDOP is described in more detail below with reference to FIG. 9.

As described herein, one or more devices (such as one or more of one or more candidate anchor UEs, a target UE, or a location server) may perform operations to downselect or select candidate anchor UEs to be anchor UEs for positioning of one or more target UEs. As noted above and used herein, downselecting refers to filtering or excluding one or more candidates from being used as an anchor for a target UE. As noted herein, downselecting (or selecting in general) may be based on measurement metrics (such as an RSRP or an SNR of a PRS or another signal) from one or more candidate anchor UEs, a mobility status of one or more candidate anchor UEs (such as based on IMU measurements, GNSS measurements, and/or positioning estimations of a candidate anchor UE), or GDOPs associated with different combinations of candidate anchor UEs with other candidate anchor UEs and/or base stations. Selecting (such as downselecting) or other operations may be performed by one or more of a location server, a candidate anchor UE, a target UE, another UE, a base station (such as a gNB), or another suitable network entity of the wireless network. Since a measurement quality of a position measurement of a candidate anchor UE, a mobility status of the candidate anchor UE, or a GDOP associated with the candidate anchor UE may change over time, one or more devices may repeat operations or otherwise adjust (such as periodically or based on a trigger) which devices are used as anchors for positioning. Example operations in selecting or downselecting candidate anchor UEs, or otherwise associated with positioning, are described in more detail below.

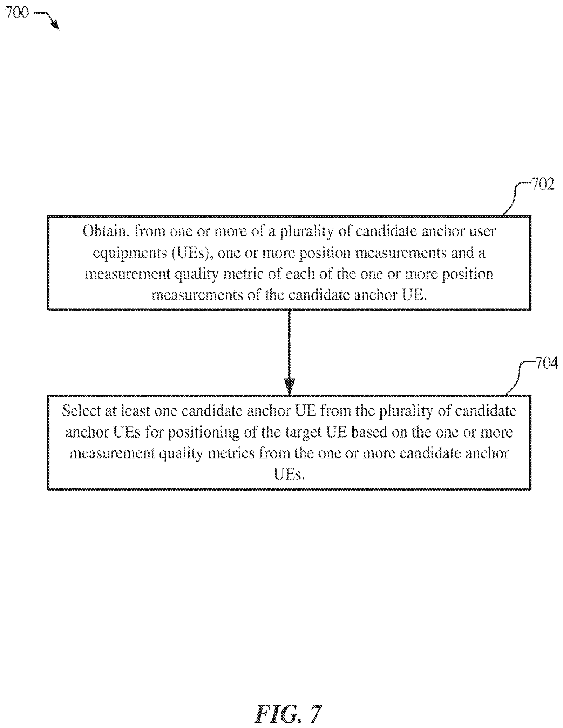

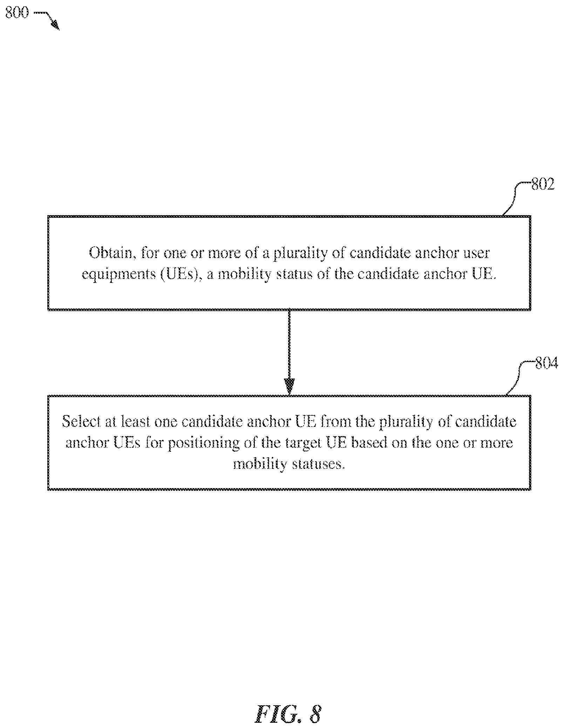

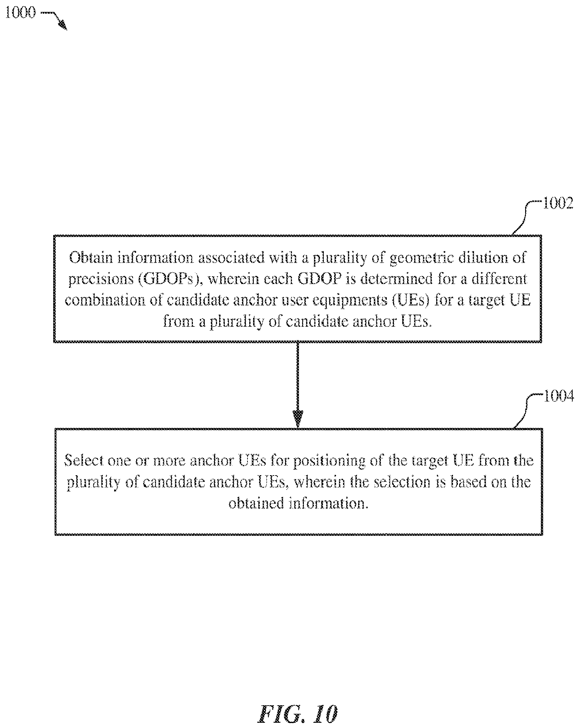

FIG. 7 shows a flowchart for an exemplary method 700 for selecting an anchor UE for positioning of a target UE in a wireless network. As used herein, selecting an anchor UE may refer to selecting a candidate anchor UE to be an anchor UE or alternatively refer to downselecting one or more candidate anchor UEs from being used as an anchor UE or otherwise reducing the number of candidate anchor UEs. For example, a subset of candidate anchor UEs may be selected to remain potential anchor UEs while unselected candidate anchor UEs may be excluded from consideration. The exemplary method 700 may be performed by any suitable device of a wireless network, such as a target UE 104 or a location server 172 shown in FIG. 1, in a manner consistent with disclosed implementations. For example, the method 700 may be performed by a target UE 104 for UE-based positioning or by a location server 172 for UE-assisted positioning. A device that may perform one or more operations in method 700 (or any of the other described methods, such as method 800 in FIG. 8 or method 1000 in FIG. 10) may include at least one transceiver (such as one or more wireless transceivers and/or one or more wired transceivers), at least one memory, and at least one processor coupled to the at least one transceiver and the at least one memory. Referring to the UE 300 as an example device, the at least one transceiver may include the transceiver 315 or the wireless transceiver 340, the at least one memory may include the memory 311, and the at least one processor may include one or more of the processor 310, one or more of processors 330-334, or the position device 319. Referring to the base station 400 as an example device, the at least one transceiver may include all or a portion of the transceiver 415, the at least one memory may include the memory 411, and the at least one processor may include the processor 410. Referring to the server 500 (e.g., a location server) as an example device, the at least one transceiver may include all or a portion of the transceiver 515, the at least one memory may include the memory 511, and the at least one processor may include the processor 510.

At block 702, a device obtains, from one or more of a plurality of candidate anchor UEs, one or more position measurements and a measurement quality metric of each of the one or more position measurements of the candidate anchor UE. Means for obtaining one or more position measurements and a measurement quality metric of each of the one or more position measurements may include at least one transceiver of the device. As noted above, if a UE is used as an anchor for positioning, the location/position of the anchor UE is needed, as a location estimate of a target UE is based on the positions of the anchors used for positioning. A candidate anchor UE may generate (or one or more other devices may determine) a position measurement of the candidate anchor UE. A position measurement may include an estimation of the position of the candidate anchor UE or a measurement that may be used to determine/estimate the position of the candidate anchor UE (such as one or more RSTDs).

In some implementations, a candidate anchor UE may generate a position measurement that is radio access technology (RAT) independent. In this manner, the position measurement and measurement quality is not associated with the wireless network (such as wireless network 100 for a UE 104). For example, the position measurement and the measurement quality metric may be based on a GPS or other GNSS. A position of the candidate anchor UE may be determined using a GNSS receiver, which is independent of a wireless transceiver associated with one or more RATs. Also or alternatively, the position may be determined or adjusted based on measurements from an IMU or other sensors. In some other implementations, the position measurement may be RAT dependent. For example, a position measurement may include a RSTD measured by the candidate anchor UE using PRS resources obtained from one or more devices in the wireless network (such as one or more base stations 102 for UE-assisted positioning or a target UE 104 for UE-based positioning). As noted above, RSTDs may be used to determine a position of a device based on the position of the device(s) transmitting the PRSs. For example, a candidate anchor UE may measure RSTDs based on three base stations within range of the candidate anchor UE so that a location of the candidate anchor UE may be determined.

A measurement quality metric of a position measurement may be associated with an accuracy of a position/location estimated or to be estimated for the candidate anchor UE. For example, if the position measurement is a location determined using a GNSS receiver (such as SPS receiver 317) at the UE, the measurement quality metric may be associated with the tolerance (potential error) of the estimated location. For example, the receiver may be associated with a potential error of inches or meters, and the estimated location of the UE may differ from the actual location by up to the potential error. The size of the potential error may be based on the number of positioning satellites coupled to the receiver (with increasing the number of satellites increasing the accuracy of the estimated location) or the resolution of the satellite (such as a timing indicated from a positioning satellite having more resolution, which may increase the accuracy of the estimated location). Example measurement quality metrics for a position measurement associated with a positioning satellite may include the number of positioning satellites used, a timing resolution or a positioning satellite location resolution, or other suitable metrics. In some implementations, the measurement quality may include an indication that GNSS based locationing is used instead of terrestrial based locationing (which GNSS based locationing may be more accurate than terrestrial based locationing).

If the one or more position measurements include one or more RSTDs measured by the candidate anchor UEs using PRS resources obtained from devices in the wireless network (or a location determined from RSTDs), a measurement quality metric may be associated with qualities that may impact determining an RSTD. Example measurement quality metrics may include an RSRP of an obtained PRS, an SNR of an obtained PRS, or other suitable indications associated with a RS's power or quality. A measurement quality metric also or alternatively may be associated with an accuracy of a position that may be determined from the RSTDs. For example, a first RSTD may be associated with a larger tolerance (potential error) of any determined location than a second RSTD based on a timing of the PRSs, a resolution of indicating or measuring a timing of the PRSs, or other factors. Example measurement quality metrics may include the timing of the PRSs or a resolution of measuring or indicating the timing of the PRSs.

The one or more position measurements and associated measurement quality metrics may be included in one or more positioning measurement reports. For example, a candidate anchor UE may provide a positioning measurement report including a position measurement and a measurement quality metric. For UE-assisted positioning, the report may be provided to a location server 172 (via a base station 102 (and optionally a relay UE) and a core network 170). For UE-based positioning, the report may be provided to a target UE. In some implementations, the device performing the operations of method 700 may obtain the one or more position measurements and measurement quality metrics in one or more NR-based positioning measurement reports from the candidate anchor UEs. For example, an NR-based positioning measurement report may include a UE's NR positioning measurement report (such as defined in release 16 of the 3GPP set of standards associated with 5G NR) configured to include the measurement quality metric.

For UE-based positioning, the device performing the operations of method 700 may be the target UE, and a positioning measurement report is obtained by the target UE from a candidate anchor UE via a sidelink between the target UE and the candidate anchor UE. The PRS resources obtained by the candidate anchor UE to determine the position measurement and the measurement quality metric in the position measurement report may be transmitted by the target UE. In this manner, the candidate anchor UE determines the measurements and metrics from PRSs obtained over a sidelink with the target UE and provides position measurement reports over the sidelink to the target UE.

For UE-assisted positioning, the device performing the operations of method 700 may be a location server. If the positioning measurement reports are NR-based, a gNB may provide one or more of the PRS resources on a downlink to a candidate anchor UE, and the candidate anchor UE may provide the positioning measurement report on an uplink to the gNB. The gNB may provide the position measurement and measurement quality metric from the report to the location server. In this manner, the location server may obtain position measurements and measurement quality metrics for a plurality of candidate anchor UEs.

At block 704, the device may select at least one candidate anchor UE from the plurality of candidate anchor UEs for positioning of the target UE based on the one or more measurement quality metrics from the one or more candidate anchor UEs. In some implementations, the device may downselect the plurality of candidate anchor UEs for positioning of the target UE to still include the at least one candidate anchor UE based on the one or more measurement quality metrics from the one or more candidate anchor UEs. In this manner, one or more candidate anchor UEs may be excluded from consideration as anchors. In some implementations, the device may select at least one candidate anchor UE as an anchor for the target UE. Means for selecting from or downselecting the plurality of candidate anchor UEs may include at least one processor of the device. In some implementations, selecting or downselecting the plurality of candidate anchor UEs may include limiting the number of candidate anchor UEs (or total candidate anchors) to a maximum number. For example, if the number of candidate anchors is to be limited to four and the measurement quality metric is a timing resolution, the device may exclude one or more candidate anchors that measured a timing resolution less than the top four timing resolutions across the candidate anchors. In some implementations, selecting or downselecting the plurality of candidate anchor UEs may include excluding one or more candidate anchor UEs based on one or more measurement quality thresholds. For example, the device may exclude a candidate anchor UE if the measured timing resolution from the UE is less than a timing resolution threshold. In some implementations, selecting or downselecting the plurality of candidate anchor UEs may include excluding one or more candidate anchor UEs based on a variability of the measurement quality metrics. The device may obtain a measurement quality metric for each of a plurality of candidate anchor UEs, the device may determine a variability of the measurement quality metrics, and the device may exclude a candidate anchor UE based on a comparison of the UE's associated measurement quality metric to the variability. For example, the device may determine a mean and a variance of the measured quality metrics. While a mean and variance are described, other measurements of a distribution, such as a parametric distribution, of the measurement quality metrics may be used, including a median, standard deviation, quantiles, etc. After determining the mean and the variance, selecting or downselecting may be based on a measurement quality metric being within a number of variances of the mean. For example, any candidate anchor UE associated with a measurement quality metric less than the mean minus one variance may be excluded from being used as an anchor UE for positioning. To note, excluding a candidate anchor UE may be for one or more target UEs. In some implementations, the candidate anchor UE may still be used as an anchor for one or more other UEs in the wireless network. As such, excluding a candidate anchor UE for positioning of a target UE does not require that the candidate anchor UE be excluded from being used as an anchor for positioning of any and all UEs in the wireless network. Also as noted herein, the term selecting may refer to downselecting, excluding, or selecting at least one candidate anchor UE.

Since an anchor UE transmits to or receives from a target UE over a sidelink, the link quality of the sidelink may also impact positioning for the target UE. For example, a noisy sidelink may prevent PRSs from being received or decoded. Selecting may be based on a link quality of a sidelink between the target UE and the candidate anchor UEs. The candidate anchor UE or the target UE may determine a link quality metric for the sidelink (such as an SINR, SNR, RSRP, etc.), and the link quality metrics for the sidelink may be considered for selection. For example, a candidate anchor UE may be excluded if a SNR of the sidelink is less than an SNR threshold. Using the link quality metrics for selection may be performed in any suitable manner, such as in any of the ways described above regarding the measurement quality metrics.

If the device selects the candidate anchor UEs to be used as anchor UEs for positioning, the device may indicate the selection to the anchor UEs, and the anchor UEs may be configured to transmit PRSs to the target UE or receive PRSs from the target UE. For example, for UE-assisted positioning, the location server 172 may indicate the selection to one or more base stations (e.g., gNBs), and the base stations (e.g., gNBs) may indicate the selection to the appropriate UEs to be used as anchors. The indication may also be provided to the target UE. For UE-based positioning, the target UE may indicate the selection to each anchor UE over its respective sidelink.

While method 700 is depicted as being performed for one instance of selecting or downselecting for clarity in describing aspects of the present disclosure, a device may be configured to perform selecting or downselecting multiple times. For example, the candidate anchor UEs may periodically provide positioning measurement reports. If a position measurement of an anchor UE changes by more than a threshold, a measurement quality metric changes by more than a threshold (or no longer meets the initial selection criteria used to select the anchor UE), or a link quality metric changes by more than a threshold or becomes less than a threshold, the device may again downselect the candidate anchor UEs or select the anchor UEs for positioning. In this manner, which anchor UEs are used for positioning may be adjusted over time.

As noted above, method 700 in FIG. 7 is with reference to position measurements of the candidate anchor UEs (with an accuracy of a determined position of an anchor UE impacting an accuracy of a determined position of a target UE). Also or alternatively, which anchor UEs are to be used may be based on a mobility status of each candidate anchor UE, as described below with reference to FIG. 8.

**FIG.** 8 shows a flowchart for an exemplary method 800 for selecting an anchor UE for positioning of a target UE in a wireless network. The exemplary method 800 may be performed by any suitable device of a wireless network, such as a target UE 104 or a location server 172 shown in FIG. 1, in a manner consistent with disclosed implementations. For example, the method 800 may be performed by a target UE 104 for UE-based positioning or by a location server 172 for UE-assisted positioning. A device that may perform one or more operations in method 800 may include at least one transceiver (such as one or more wireless transceivers and/or one or more wired transceivers), at least one memory, and at least one processor coupled to the at least one transceiver and the at least one memory. Referring to the UE 300 as an example device, the at least one transceiver may include the transceiver 315 or the wireless transceiver 340, the at least one memory may include the memory 311, and the at least one processor may include one or more of the processor 310, one or more of processors 330-334, or the position device 319. Referring to the base station 400 as an example device, the at least one transceiver may include all or a portion of the transceiver 415, the at least one memory may include the memory 411, and the at least one processor may include the processor 410. Referring to the server 500 (e.g., a location server) as an example device, the at least one transceiver may include all or a portion of the transceiver 515, the at least one memory may include the memory 511, and the at least one processor may include the processor 510.

At block 802, the device obtains, for one or more of a plurality of candidate anchor UEs, a mobility status of the candidate anchor UE. Means for obtaining the mobility status may include one or more of the at least one transceiver, the at least one memory, or the at least one processor of the device. In some implementations, obtaining the mobility status of a candidate anchor UE refers to the candidate anchor UE determining the mobility status and the device obtaining the mobility status from the candidate anchor UE. The candidate anchor UE may determine the mobility status using RAT independent methods. For example, the candidate anchor UE may use IMU measurements (such as an accelerometer or other sensor measurements) to determine a movement of the candidate anchor UE. In another example, the candidate anchor UE may determine differences in its location based on GNSS measurements over time to determine a movement of the candidate anchor UE. The movement may be a velocity, speed, acceleration, displacement, or other indication of a mobility of the candidate anchor UE. Also or alternatively, the candidate anchor UE may determine the mobility status using RAT dependent methods. For example, the candidate anchor UE may determine its location using RSTDs (such as described above) at different times, and the candidate anchor UE may determine its movement based on the differences between the locations over time. The movement may be a velocity, speed, acceleration, displacement, a doppler shift, or other indication of a mobility of the candidate anchor UE. The mobility status may be provided in any suitable manner, such as in an NR-based positioning measurement report from the candidate anchor UE towards the target UE or the location server. For example, for UE-based positioning, the target UE may obtain a mobility status from the candidate anchor UE via a sidelink between the target UE and the candidate anchor UE.

In some implementations of obtaining the mobility status, the device itself determines the mobility status of a candidate anchor UE. For example, the device may determine the mobility status of the candidate anchor UE from a position history of the candidate anchor UE. For UE-assisted positioning, the location server 172 may perform the operations of method 800. In this manner, the location server 172 may determine the mobility status of the candidate anchor UE from its position history. In some implementations, the location server 172 may include a database of positions for one or more UEs. The positions may be determined from RSTDs obtained for the UEs (such as described above), with the UEs or other devices providing positioning measurement reports including the RSTDs. In this manner, the location server 172 may determine the position history. The location server 172 may use the positions of a UE (and optionally the times of the positions) to determine a movement of the UE (which may include a speed, velocity, acceleration, displacement, etc.). For UE-based positioning, positioning measurement reports may be provided to the target UE, and the target UE may determine a position history of the candidate anchor UE over time.

At block 804, the device may select at least one candidate anchor UE from the plurality of candidate anchor UEs for positioning of the target UE based on the one or more mobility statuses. In some implementations, the device may downselect the plurality of candidate anchor UEs for positioning of the target UE based on the one or more mobility statuses. Means for selecting the at least one candidate anchor UE (such as downselecting the plurality of candidate anchor UEs) may include at least one processor of the device. In some implementations, selecting or downselecting the plurality of candidate anchor UEs may include excluding one or more candidate anchor UEs based on one or more mobility status thresholds. For example, the device may exclude a candidate anchor UE if the speed of the UE is greater than a speed threshold. In some implementations, selecting or downselecting the plurality of candidate anchor UEs may include excluding one or more candidate anchor UEs based on a variability of the mobility status. For example, the device may determine that the candidate anchor UE's mobility status fluctuates more than a threshold number of times within an amount of time (such as changes in speed, displacement, etc. over time), which may indicate changes in the movement of the candidate anchor UE. The device may exclude the candidate anchor UE from being used based on the number of fluctuations being greater than the threshold number.

Similar to as described above with reference to FIG. 7, since an anchor UE transmits to or receives from a target UE over a sidelink, the link quality of the sidelink may also impact positioning for the target UE. For example, a noisy sidelink may prevent PRSs from being received or decoded. Selecting may be based on a link quality of a sidelink between the target UE and the candidate anchor UEs. The candidate anchor UE or the target UE may determine a link quality metric for the sidelink (such as an SINR, SNR, RSRP, etc.), and the link quality metrics for the sidelink may be considered for selection. For example, a candidate anchor UE may be excluded if a SNR of the sidelink is less than an SNR threshold. Using the link quality metrics for selection may be performed in any suitable manner, such as in any of the ways described above regarding the measurement quality metrics or the mobility statuses.

In some implementations, if the device selects the candidate anchor UEs to be used as anchor UEs for positioning, the device may indicate the selection to the anchor UEs, and the anchor UEs may be configured to transmit PRSs to the target UE or receive PRSs from the target UE. For example, for UE-assisted positioning, the location server 172 may indicate the selection to one or more base stations (e.g., gNBs), and the base stations (e.g., gNBs) may indicate the selection to the appropriate UEs to be used as anchors. The indication may also be provided to the target UE. For UE-based positioning, the target UE may indicate the selection to each anchor UE over its respective sidelink.

While method 800 is depicted as being performed for one instance of selecting or downselecting for clarity in describing aspects of the present disclosure, a device may be configured to perform selecting or downselecting multiple times. For example, an anchor UE may have a movement less than a threshold before time Q, but the anchor UE may have a movement greater than the threshold after time Q. As a result, the anchor UE may no longer be suitable for positioning. In some implementations, the candidate anchor UEs may periodically provide its mobility status to the device. In this manner, the device may periodically determine whether the candidate anchor UE is to remain an anchor UE or is to remain excluded from being an anchor UE (such as based on one or more thresholds, variability, etc. as described above), and which anchor UEs are used may be adjusted over time. In some implementations, providing the mobility status by the candidate anchor UE is trigger based. For example, if the mobility status is greater than a mobility threshold (such as a speed being greater than a speed threshold), the candidate anchor UE may provide the mobility status to the device. In this manner, the candidate anchor UE may save power by not reporting the mobility status to the device when the mobility status has not changed more than a threshold since the last report. While the above describes reporting the mobility status periodically or based on a trigger, providing the mobility status may refer to providing position measurements or other information (such as RSTDs) by the candidate anchor UEs, with the device itself determining the candidate anchor UE's mobility status based on the position measurements or other information. Also or alternatively, the candidate anchor UE may indicate a link quality metric change of more than a threshold or a link quality metric becoming less than a threshold. Based on the mobility status changes and/or link quality metric changes, the device may again downselect the candidate anchor UEs or select the anchor UEs for positioning. In this manner, which anchor UEs are used for positioning may be adjusted over time.

As noted above, method 700 in FIG. 7 is with reference to position measurements of the candidate anchor UEs, and method 800 in FIG. 8 is with reference to mobility statuses of the candidate anchor UEs. Also or alternatively, which anchor UEs are to be used for positioning of a target UE may be based on a GDOP associated with a candidate anchor UE.

In positioning, the geometry of the target UE and the TRPs impacts the accuracy or potential error in a location estimate for the target UE. For example, based on the resolution and timing of PRSs, a UE's location may be within a distance range from a TRP. For multiple TRPs, the UE's location may be within an intersection of the distance ranges for the multiple TRPs. The intersection of ranges is a position uncertainty of the UE using multiple TRPs for positioning. Adjusting the locations of the TRPs may adjust the shape and size of the position uncertainty, which may impact the accuracy in determining the UE's position.

**FIG. 9A** is a diagram 900 illustrating a position uncertainty 910A for a UE associated with two TRPs 902 and 904 for positioning. Based on the timing of PRSs and a resolution of the timing, a location of a UE may be determined to be within a range 906 for the TRP 902. Similarly, based on the timing of PRSs and a resolution of the timing, the location of the UE may be determined to be within a range 908 for the TRP 904. In this manner, the UE may be located within the intersection of the two ranges 906 and 908, indicated as the position uncertainty 910A. The locations of the TRPs 902 and 904 impacts the dimensions and size of the position uncertainty 910A. Also, while not shown, the number of TRPs to be used may impact the dimensions and size of the position uncertainty 910A.

**FIG. 9B** is a diagram 901 illustrating a position uncertainty 910B for the UE associated with two TRPs 902 and 904 for positioning. Compared to diagram 900, the locations of the TRPs 902 and 904 with respect to one another are different. As a result, the ranges 906 and 908 in diagram 901 are associated with a position uncertainty 910B. The size of the position uncertainty 910B is greater than the size of the position uncertainty 910A, with the UE being located somewhere within the respective position uncertainty. As a result, a potential error in the location estimation for the UE is greater in the topology of TRPs in diagram 901 than in diagram 900. An intersection of ranges (such as a position uncertainty 910A or 910B) may be referred to herein as a GDOP. The GDOP may be calculated in any suitable manner based on the type of positioning method used (such as TOA based positioning).

In some implementations, a group of candidate anchor UEs may be selected or downselected based on GDOPs associated with one or more candidate anchor UEs. For example, some candidate anchor UEs may be excluded from being anchors or some candidate anchor UEs may be selected as anchors to reduce the size of the GDOP, which may increase the accuracy or precision of the location estimate of a target UE.

**FIG. 10** shows a flowchart for an exemplary method 1000 for selecting an anchor UE for positioning of a target UE in a wireless network. The exemplary method 1000 may be performed by any suitable device of a wireless network, such as a target UE 104 or a location server 172 shown in FIG. 1, in a manner consistent with disclosed implementations. For example, the method 1000 may be performed by a target UE 104 for UE-based positioning or by a location server 172 for UE-assisted positioning. A device that may perform one or more operations in method 1000 may include at least one transceiver (such as one or more wireless transceivers and/or one or more wired transceivers), at least one memory, and at least one processor coupled to the at least one transceiver and the at least one memory. Referring to the UE 300 as an example device, the at least one transceiver may include the transceiver 315 or the wireless transceiver 340, the at least one memory may include the memory 311, and the at least one processor may include one or more of the processor 310, one or more of processors 330-334, or the position device 319. Referring to the base station 400 as an example device, the at least one transceiver may include all or a portion of the transceiver 415, the at least one memory may include the memory 411, and the at least one processor may include the processor 410. Referring to the server 500 (e.g., a location server) as an example device, the at least one transceiver may include all or a portion of the transceiver 515, the at least one memory may include the memory 511, and the at least one processor may include the processor 510.

At block 1002, the device may obtain information associated with a plurality of GDOPs, with each GDOP being determined for a different combination of candidate anchor UEs for a target UE from a plurality of candidate anchor UEs. Means for obtaining the information may include the least one transceiver of the device. In some implementations, the target UE may determine each GDOP. For example, a plurality of candidate anchor UEs are within range and able to communicate over sidelinks with the target UE. The target UE may select a first subset of the candidate anchor UEs and estimate a first GDOP for the first subset, select a second subset of the candidate anchor UEs and estimate a second GDOP for the second subset, and so on. Any suitable number of candidate anchor UEs may be selected for each subset (such as three or more), and any suitable number of subsets may be selected. For example, the target UE may limit the number of subsets and/or number of UEs to a minimum and/or maximum number to balance processing resources and time in estimating the GDOPs with being able to identify the best subsets of candidate anchor UEs for positioning of the target UE (such as the subsets associated with the smallest GDOPs).

Determining (e.g., estimating) a GDOP may be performed in any suitable manner. For example, the target UE may use any conventional statistical method to estimate a GDOP. Also or alternatively, the target UE may use one or more machine learning models to estimate the GDOP. Inputs to the one or more machine learning models may include RSTDs measured by the candidate anchor UEs, other position measurements by the candidate anchor UEs, signal quality metrics, mobility statuses, etc. In some implementations, data from base stations may be used as training data to train the machine learning models to estimate GDOPs. The locations of the base stations are known and may be used to determine known GDOPs associated with different subsets of the base stations. The known GDOPs may be compared to the estimated GDOPs as used as feedback in training the machine learning models. With the machine learning models trained, the models may be used to estimate a GDOP for a subset of candidate anchor UEs for which their locations may not be known or may be less accurate than the known locations of the base stations. While the above examples describe a target UE as determining the GDOPs for clarity is describing aspects of the disclosure, any suitable device may determine one or more GDOPs (e.g., a base station, a neighboring UE, a candidate anchor UE, or another suitable network entity).

At 1004, the device may select one or more anchor UEs for positioning of the target UE from the plurality of candidate anchor UEs. Means for selecting one or more anchor UEs may include at least one processor of the device. The selection is based on the information associated with the plurality of GDOPs. As noted above, the target UE may determine the GDOPs for different subsets of candidate anchor UEs. For UE-based positioning, the target UE may select the anchor UEs from the candidate anchor UEs based on the determined GDOPs. In this manner, the information associated with the plurality of GDOPs may be the GDOPs themselves. For example, the target UE may compare the GDOPs to determine the smallest GDOP, and the target UE may select the candidate anchor UEs used for the smallest GDOP as the anchor UEs to be used for positioning.

For UE-assisted positioning, the location server 172 may select the anchor UEs from the candidate anchor UEs. In some implementations, the information associated with the plurality of GDOPs may be the GDOPs themselves. In this manner, the plurality of GDOPs may be provided (such as by the target UE) to a base station (e.g., gNB) or a relay UE between the target UE and the base station (e.g., gNB), and the GDOPs are relayed to the location server 172 (e.g., through a gNB and/or the core network 170). Indicating the GDOPs may include indicating the candidate anchor UEs associated with each GDOP. In this manner, the location server 172 may obtain the GDOPs from a base station, and the location server 172 may select the one or more anchor UEs from the candidate anchor UEs based on the plurality of GDOPs obtained from the base station.

The target UE may indicate all or only a portion of the GDOPs and the associated candidate anchor UEs determined by the target UE. For example, the target UE may exclude GDOPs greater than a threshold size. In another example, the target UE may exclude GDOPs associated with a specific candidate anchor UE (such as based on a measurement quality of a position measurement or a mobility status of the candidate anchor UE). In this manner, the target UE may downselect the group of candidate anchor UEs before the location server 172 selects the candidate anchor UEs from the group.

Also or alternative to indicating the GDOPs, the target UE may determine one or more preferred anchor UEs from the plurality of candidate anchor UEs based on the plurality of GDOPs, and the target UE may indicate the one or more preferred anchor UEs. In this manner, the information associated with the plurality of GDOPs may include an indication of the one or more preferred anchor UEs. For example, the target UE may determine one or more preferred anchor UEs as one or more candidate anchor UEs associated with a specific GDOP (such as one or more smallest GDOPs estimated by the target UE) or GDOPs less than a threshold GDOP size. If indicating preferred anchor UEs instead of GDOPs and associated candidate anchor UEs for each GDOP, the indication may reduce the signaling requirements as compared to indicating the GDOPs. The target UE may indicate the one or more preferred anchor UEs to a base station serving the target UE or a relay UE between the base station and the target UE (with the indication being provided to the base station), and the location server 172 may obtain the indication of the one or more preferred anchor UEs from the base station (e.g., via the core network 170). In some implementations, the indication may include a ranking or indication of the order of preferred anchor UEs. The location server 172 may select the one or more anchor UEs based on the indication of the one or more preferred anchor UEs.

While method 1000 is described above with reference to a single target UE, selection of the anchor UEs for positioning of the target UE may be based on a selection of anchor UEs for positioning of one or more UEs other than the target UE. The location server 172 may support UE-assisted positioning for a plurality of target UEs. In this manner, a TRP may be used for positioning of multiple target UEs. If the location server 172 would determine anchor UEs for each target UE without reference to anchor UEs determined for other target UEs, a large number of UEs may be selected as anchors, causing more UEs to consume resources in acting as TRPs for positioning than may be needed or desired. Selection of anchor UEs for a first target UE may be in consideration of the selection of anchor UEs for a second target UE or other target UEs. For example, if the location server 172 obtains indications of preferred anchor UEs for the target UEs, the location server 172 may compare the preferred anchor UEs across multiple target UEs to determine a subset of anchor UEs to support positioning for all of the target UEs. While a preferred anchor UE may be indicated for a target UE, the preferred anchor UE may be excluded based on not being a preferred anchor UE for other target UEs. While some examples are provided above to describe some aspects of the present disclosure, any suitable manner in determining the anchor UEs to be used for positioning of multiple target UEs may be performed.

Similar to as described above with reference to FIGs. 7 and 8, since an anchor UE transmits to or receives from a target UE over a sidelink, the link quality of the sidelink may also impact positioning for the target UE. For example, a noisy sidelink may prevent PRSs from being received or decoded. Selection of the anchor UEs may be based on a link quality of a sidelink between the target UE and the candidate anchor UEs. The candidate anchor UE or the target UE may determine a link quality metric for the sidelink (such as an SINR, SNR, RSRP, etc.), and the link quality metrics for the sidelink may be considered for downselection or selection. For example, a candidate anchor UE may be excluded if a SNR of the sidelink is less than an SNR threshold. Using the link quality metrics for downselection or selection may be performed in any suitable manner, such as in any of the ways described above regarding the measurement quality metrics, the mobility statuses, or the GDOPs.

In some implementations, the device may indicate the selection to the selected anchor UEs, and the anchor UEs may be configured to transmit PRSs to the target UE or receive PRSs from the target UE. For example, for UE-assisted positioning, the location server 172 may indicate the selection to one or more base stations (e.g., gNBs), and the base stations (e.g., gNBs) may indicate the selection to the appropriate UEs to be used as anchors. The indication may also be provided to the target UE. For UE-based positioning, the target UE may indicate the selection to each anchor UE over its respective sidelink.

While method 1000 is depicted as being performed for one instance of selecting one or more anchor UEs for clarity in describing aspects of the present disclosure, a device may be configured to perform selection multiple times. For example, a GDOP may change based on a movement of an anchor UE. The location server or the target UE (or another suitable device) may determine that the GDOP changes based on periodically estimating the GDOP over time (such as based on new position measurements or other inputs from the anchor UEs) or based on triggers associated with a position measurement or a mobility status of an anchor UE. As a result, the anchor UE may no longer be suitable for positioning for a target UE. In this manner, the device may periodically determine whether the candidate anchor UE is to remain an anchor UE or is to remain excluded from being an anchor UE (such as based on one or more thresholds, variability, etc. as described above), and which anchor UEs are used may be adjusted over time. For example, new GDOPs may be determined, and one or more new anchor UEs may be selected for positioning based on information associated with the new GDOPs. Also or alternative, for UE-assisted positioning, if the number of target UEs or the target UEs themselves change, the location server may again perform method 1000 to select one or more anchor UEs. Selecting the one or more anchor UEs may be periodic or trigger based in any suitable manner.

Methods 700, 800, and 1000 in FIGs. 7, 8, and 10, respectively, describe selection or downselection based on measurement qualities of position measurements, mobility statuses, or GDOPs independent from one another. However, selection or downselection may be based on any combination of measurement qualities of position measurements, mobility statuses, or GDOPs (or optionally, link quality metrics of the sidelinks). In this manner, one or more devices of the wireless network (such as location server 172 or a target UE) may perform one or more operations of one or more of methods 700, 800, or 1000. For example, selection of anchor UEs may be based on mobility statuses of the candidate anchor UEs and GDOPs associated with the candidate anchor UEs, downselection of candidate anchor UEs may be based on measurement quality metrics of the position measurements of the candidate anchor UEs and mobility statuses of the candidate anchor UEs, etc.

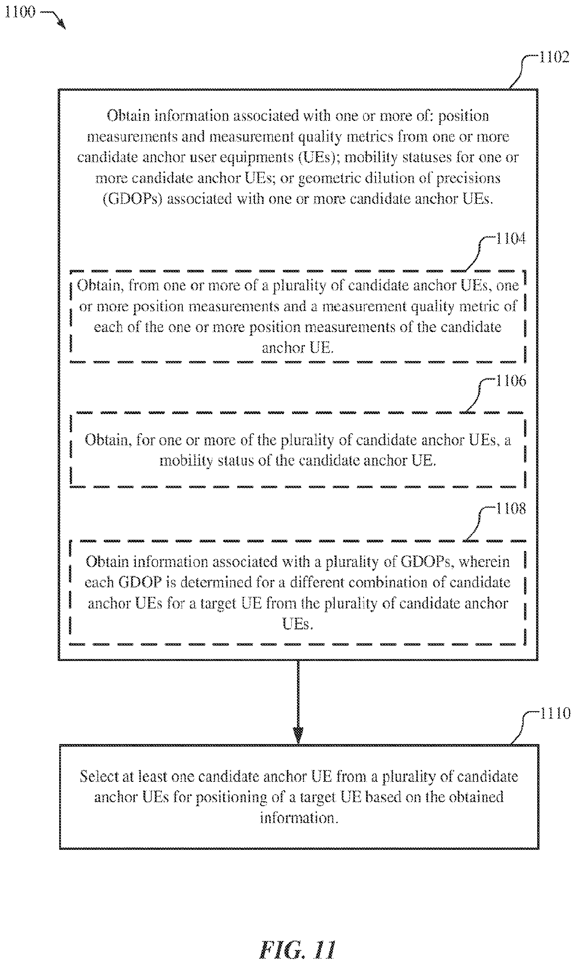

**FIG. 11** shows a flowchart for an exemplary method for selecting an anchor UE for positioning of a target UE in a wireless network. The exemplary method 1100 may be performed by any suitable device of a wireless network, such as a target UE 104 or a location server 172 shown in FIG. 1, in a manner consistent with disclosed implementations. For example, the method 1100 may be performed by a target UE 104 for UE-based positioning or by a location server 172 for UE-assisted positioning. A device that may perform one or more operations in method 1100 may include at least one transceiver (such as one or more wireless transceivers and/or one or more wired transceivers), at least one memory, and at least one processor coupled to the at least one transceiver and the at least one memory. Referring to the UE 300 as an example device, the at least one transceiver may include the transceiver 315 or the wireless transceiver 340, the at least one memory may include the memory 311, and the at least one processor may include one or more of the processor 310, one or more of processors 330-334, or the position device 319. Referring to the base station 400 as an example device, the at least one transceiver may include all or a portion of the transceiver 415, the at least one memory may include the memory 411, and the at least one processor may include the processor 410. Referring to the server 500 (e.g., a location server) as an example device, the at least one transceiver may include all or a portion of the transceiver 515, the at least one memory may include the memory 511, and the at least one processor may include the processor 510.

At 1102, the device obtains information associated with one or more of: position measurements and measurement quality metrics from one or more candidate anchor UEs; mobility statuses for one or more candidate anchor UEs; or GDOPs associated with one or more candidate anchor UEs. Means for obtaining the information may include one or more of the at least one transceiver, the at least one memory, or the at least one processor of the device. As noted above, selecting at least one candidate anchor UE may be based on position measurements and measurement quality metrics associated with the candidate anchor UEs (such as described above with reference to FIG. 7), mobility statuses of the candidate anchor UEs (such as described above with reference to FIG. 8), information associated with GDOPs for different combinations of candidate anchor UEs for a target UE (such as described above with reference to FIG. 10), or a combination of any of the above. In this manner, the device may perform one or more of optional steps 1104-1108 to perform step 1102.

In some implementations, the device may obtain, from one or more of a plurality of candidate anchor UEs, one or more position measurements and a measurement quality metric of each of the one or more position measurements of the candidate anchor UE (1104). Means for obtaining one or more position measurements and a measurement quality metric of each of the one or more position measurements may include at least one transceiver of the device. Optional step 1104 may be the same as step 702 in FIG. 7 described above.

In some implementations, the device may obtain, for one or more of the plurality of candidate anchor UEs, a mobility status of the candidate anchor UE (1106). Means for obtaining the mobility status may include one or more of the at least one transceiver, the at least one memory, or the at least one processor of the device. Optional step 1106 may be the same as step 802 in FIG. 8 described above.

In some implementations, the device may obtain information associated with a plurality of GDOPs, wherein each GDOP is determined for a different combination of candidate anchor UEs for a target UE from the plurality of candidate anchor UEs (1108). Means for obtaining the information may include the least one transceiver of the device. Optional step 1108 may be the same as step 1002 in FIG. 10 described above.

At 1110, the device selects at least one candidate anchor UE from a plurality of candidate anchor UEs for positioning of a target UE based on the obtained information. Means for selecting the at least one candidate anchor UE may include at least one processor of the device. For example, at least one processor of a location server or a target UE may be configured to select at least one candidate anchor UE (such as downselection of the plurality of candidate anchor UEs or selection or one or more candidate anchor UEs as anchors) based on one or more of the obtained one or more positions measurements and measurement quality metric of one or more candidate anchor UEs, the obtained mobility status of one or more candidate anchor UEs, or information associated with a plurality of GDOPs for different combinations of candidate anchor UEs for the target UE. To perform step 1110, the device may perform a portion or all of the operations described herein for one or more of step 704 in FIG. 7 described above, step 804 in FIG. 8 described above, or step 1004 in FIG. 10 described above.

Reference throughout this specification to "one example", "an example", "certain examples", or "exemplary implementation" means that a particular feature, structure, or characteristic described in connection with the feature and/or example may be included in at least one feature and/or example of claimed subject matter. Thus, the appearances of the phrase "in one example", "an example", "in certain examples" or "in certain implementations" or other like phrases in various places throughout this specification are not necessarily all referring to the same feature, example, and/or limitation. Furthermore, the particular features, structures, or characteristics may be combined in one or more examples and/or features.

Some portions of the detailed description included herein are presented in terms of algorithms or symbolic representations of operations on binary digital signals stored within a memory of a specific apparatus or special purpose computing device or platform. In the context of this particular specification, the term specific apparatus or the like includes a general purpose computer once it is programmed to perform particular operations pursuant to instructions from program software. Algorithmic descriptions or symbolic representations are examples of techniques used by those of ordinary skill in the signal processing or related arts to convey the substance of their work to others skilled in the art. An algorithm is here, and generally, is considered to be a self-consistent sequence of operations or similar signal processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals, or the like. It should be understood, however, that all of these or similar terms are to be associated with appropriate physical quantities and are merely convenient labels. Unless specifically stated otherwise, as apparent from the discussion herein, it is appreciated that throughout this specification discussions utilizing terms such as "processing," "computing," "calculating," "determining" or the like refer to actions or processes of a specific apparatus, such as a special purpose computer, special purpose computing apparatus or a similar special purpose electronic computing device. In the context of this specification, therefore, a special purpose computer or a similar special purpose electronic computing device is capable of manipulating or transforming signals, typically represented as physical electronic or magnetic quantities within memories, registers, or other information storage devices, transmission devices, or display devices of the special purpose computer or similar special purpose electronic computing device.

In the preceding detailed description, numerous specific details have been set forth to provide a thorough understanding of claimed subject matter. However, it will be understood by those skilled in the art that claimed subject matter may be practiced without these specific details. In other instances, methods and apparatuses that would be known by one of ordinary skill have not been described in detail so as not to obscure claimed subject matter.

The terms, "and", "or", and "and/or" as used herein may include a variety of meanings that also are expected to depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein may be used to describe any feature, structure, or characteristic in the singular or may be used to describe a plurality or some other combination of features, structures or characteristics. Though, it should be noted that this is merely an illustrative example and claimed subject matter is not limited to this example.

While there has been illustrated and described what are presently considered to be example features, it will be understood by those skilled in the art that various other modifications may be made, and equivalents may be substituted, without departing from claimed subject matter. Additionally, many modifications may be made to adapt a particular situation to the teachings of claimed subject matter without departing from the central concept described herein.

Implementation examples are described in the following numbered clauses:

1. A method of selecting an anchor user equipment (UE) for positioning of a target UE in a wireless network, including:

obtaining, from one or more of a plurality of candidate anchor UEs, one or more position measurements and a measurement quality metric of each of the one or more position measurements of the candidate anchor UE; and selecting at least one candidate anchor UE from the plurality of candidate anchor UEs for positioning of the target UE based on the one or more measurement quality metrics from the one or more candidate anchor UEs.

2. The method of clause 1, where obtaining the one or more position measurements and measurement quality metrics of a candidate anchor UE includes obtaining the one or more position measurements and measurement quality metrics of the candidate anchor UE in one or more NR-based positioning measurement reports from the candidate anchor UE.

3. The method of one or more of clauses 1-2, where the one or more position measurements includes one or more reference signal time differences (RSTDs) measured by the candidate anchor UE using positioning reference signal (PRS) resources obtained from one or more devices in the wireless network.

4. The method of one or more of clauses 1-3, where:

UE-based positioning is to be performed by the target UE; and the one or more positioning measurement reports are obtained by the target UE from the candidate anchor UE via a sidelink (SL) between the target UE and the candidate anchor UE.

5. The method of one or more of clauses 1-4, further including providing, by the target UE, one or more of the PRS resources to the candidate anchor UE via the SL.

6. The method of one or more of clauses 1-3, where:

UE-assisted positioning for the target UE is to be performed by a location server of the wireless network; one or more of the PRS resources are provided by a base station on a downlink (DL) to the candidate anchor UE; the one or more positioning measurement reports are provided from a candidate anchor UE to the base station; the one or more position measurements and measurement quality metrics from the one or more positioning measurement reports are provided from the base station to the location server; and selecting the at least one candidate anchor UE includes the location server selecting a candidate anchor UE as an anchor UE based on the one or more position measurements and measurement quality metrics.

7. The method of clause 1, where, for the one or more candidate anchor UEs, each position measurement and associated measurement quality metric is radio access technology (RAT) independent.

8. The method of one or more of clauses 1-7, where each position measurement and associated measurement quality metric is determined by the candidate anchor UE using a global navigation satellite system (GNSS).

9. The method of one or more of clauses 1-7, where:

UE-based positioning is to be performed by the target UE; and the one or more position measurements and measurement quality metrics of a candidate anchor UE are obtained from the candidate anchor UE via a sidelink (SL) between the target UE and the candidate anchor UE.

10. The method of one or more of clauses 1-7, where:

UE-assisted positioning of the target UE is to be performed by a location server of the wireless network; the one or more position measurements and metric quality metrics are provided from a candidate anchor UE to a base station; the one or more position measurements and measurement quality metrics are provided from the base station to the location server; and selecting the at least one candidate anchor UE includes the location server selecting a candidate anchor UE as an anchor UE based on the one or more position measurements and measurement quality metrics.

11. The method of clause 1, further including determining a variability of the measurement quality metrics for the plurality of candidate anchor UEs, where selecting the at least one candidate anchor UE is based on the determined variability.

12. The method of one or more of clauses 1-11, where the variability includes a mean and a variance of the measurement quality metrics.

13. The method of clause 1, where selecting the at least one candidate anchor UE is also based on a link quality of a sidelink (SL) between the target UE and the one or more candidate anchor UEs.

14. A device configured for selecting an anchor user equipment (UE) for positioning of a target UE in a wireless network, including:

at least one transceiver; at least one memory; and at least one processor coupled to the at least one transceiver and the at least one memory, where the at least one processor is configured to cause the device to:

obtain, via the at least one transceiver and from one or more of a plurality of candidate anchor UEs, one or more position measurements and a measurement quality metric of each of the one or more position measurements of the candidate anchor UE; and select, via the at least one processor, at least one candidate anchor UE from the plurality of candidate anchor UEs for positioning of the target UE based on the one or more measurement quality metrics from the one or more candidate anchor UEs.

15. The device of clause 14, where, to obtain the one or more position measurements and measurement quality metrics of a candidate anchor UE, the at least one processor is configured to cause the device to obtain the one or more position measurements and measurement quality metrics of the candidate anchor UE in one or more NR-based positioning measurement reports from the candidate anchor UE.

16. The device of one or more of clauses 14-15, where the one or more position measurements includes one or more reference signal time differences (RSTDs) measured by the candidate anchor UE using positioning reference signal (PRS) resources obtained from one or more devices in the wireless network.

17. The device of one or more of clauses 14-16, where:

UE-based positioning is configured to be performed by the target UE; and
the at least one processor is configured to cause the device to obtain, via the at least one transceiver, the one or more positioning measurement reports from the candidate anchor UE via a sidelink (SL) between the target UE and the candidate anchor UE.

18. The device of one or more of clauses 14-17, where the at least one processor is configured to cause the device to provide, via the at least one transceiver, one or more of the PRS resources to the candidate anchor UE via the SL, where the device is the target UE.

19. The device of one or more of clauses 14-16, where:

the device is a location server of the wireless network configured to perform UE-assisted positioning for the target UE;
one or more of the PRS resources are to be provided by a base station on a downlink (DL) to the candidate anchor UE;
the one or more positioning measurement reports are to be provided by a candidate anchor UE to the base station;
the one or more position measurements and measurement quality metrics from the one or more positioning measurement reports are to be provided from the base station to the location server; and
to select the at least one candidate anchor UE, the at least one processor is configured to cause the device to select, via the at least one processor, a candidate anchor UE as an anchor UE based on the one or more position measurements and measurement quality metrics.

20. The device of clause 14, where, for the one or more candidate anchor UEs, each position measurement and associated measurement quality metric are radio access technology (RAT) independent.

21. The device of one or more of clauses 14-20, where each position measurement and associated measurement quality metric is to be determined by the candidate anchor UE using a global navigation satellite system (GNSS).

22. The device of one or more of clauses 14-20, where:

the device is the target UE configured to perform UE-based positioning; and
the at least one processor is configured to cause the device to obtain, via the at least one transceiver, the one or more position measurements and measurement quality metrics of a candidate anchor UE from the candidate anchor UE via a sidelink (SL) between the target UE and the candidate anchor UE.

23. The device of one or more of clauses 14-20, where:

the device is a location server of the wireless network configured to perform UE-assisted positioning of the target UE;
the one or more position measurements and metric quality metrics are to be provided from a candidate anchor UE to a base station;
the one or more position measurements and measurement quality metrics are to be provided from the base station to the location server; and
to select the at least one candidate anchor UE, the at least one processor is configured to cause the device to select, via the at least one processor, a candidate anchor UE as an anchor UE based on the one or more position measurements and measurement quality metrics.

24. The device of clause 14, where the at least one processor is configured to cause the device to determine, via the at least one processor, a variability of the measurement quality metrics for the plurality of candidate anchor UEs, where selecting the at least one candidate anchor UE is based on the determined variability.

25. The device of one or more of clauses 14-24, where the variability includes a mean and a variance of the measurement quality metrics.

26. The device of clause 14, where selecting the at least one candidate anchor UE is also based on a link quality of a sidelink (SL) between the target UE and the one or more candidate anchor UEs.

27. A non-transitory computer-readable medium storing instructions that, when executed by at least one processor of a device configured for selecting an anchor user equipment (UE) for positioning of a target UE in a wireless network, cause the device to:

obtain, via at least one transceiver and from one or more of a plurality of candidate anchor UEs, one or more position measurements and a measurement quality metric of each of the one or more position measurements of the candidate anchor UE; and
select, via the at least one processor, at least one candidate anchor UE from the plurality of candidate anchor UEs for positioning of the target UE based on the one or more measurement quality metrics from the one or more candidate anchor UEs.

28. The computer-readable medium of clause 27, where execution of the instructions causes the device to, in obtaining the one or more position measurements and measurement quality metrics of a candidate anchor UE, obtain the one or more position measurements and measurement quality metrics of the candidate anchor UE in one or more NR-based positioning measurement reports from the candidate anchor UE.

29. The computer-readable medium of one or more of clauses 27-28, where the one or more position measurements includes one or more reference signal time differences (RSTDs) measured by the candidate anchor UE using positioning reference signal (PRS) resources obtained from one or more devices in the wireless network.

30. The computer-readable medium of one or more of clauses 27-29, where:

UE-based positioning is configured to be performed by the target UE; and
execution of the instructions causes the device to obtain, via the at least one transceiver, the one or more positioning measurement reports from the candidate anchor UE via a sidelink (SL) between the target UE and the candidate anchor UE.

31. The computer-readable medium of one or more of clauses 27-30, where execution of the instructions causes the device to provide, via the at least one transceiver, one or more of the PRS resources to the candidate anchor UE via the SL, where the device is the target UE.

32. The computer-readable medium of one or more of clauses 27-29, where:

the device is a location server of the wireless network configured to perform UE-assisted positioning for the target UE;
one or more of the PRS resources are to be provided by a base station on a downlink (DL) to the candidate anchor UE;
the one or more positioning measurement reports are to be provided by a candidate anchor UE to the base station;
the one or more position measurements and measurement quality metrics from the one or more positioning measurement reports are to be provided from the base station to the location server; and
execution of the instructions causes the device to, in selecting the at least one candidate anchor UE, select, via the at least one processor, a candidate anchor UE as an anchor UE based on the one or more position measurements and measurement quality metrics.

33. The computer-readable medium of clause 27, where, for the one or more candidate anchor UEs, each position measurement and associated measurement quality metric are radio access technology (RAT) independent.

34. The computer-readable medium of one or more of clauses 27-33, where each position measurement and associated measurement quality metric is to be determined by the candidate anchor UE using a global navigation satellite system (GNSS).

35. The computer-readable medium of one or more of clauses 27-33, where:

the device is the target UE configured to perform UE-based positioning; and
execution of the instructions causes the device to obtain, via the at least one transceiver, the one or more position measurements and measurement quality metrics of a candidate anchor UE from the candidate anchor UE via a sidelink (SL) between the target UE and the candidate anchor UE.

36. The computer-readable medium of one or more of clauses 27-33, where:

the device is a location server of the wireless network configured to perform UE-assisted positioning of the target UE;
the one or more position measurements and metric quality metrics are to be provided from a candidate anchor UE to a base station;
the one or more position measurements and measurement quality metrics are to be provided from the base station to the location server; and
execution of the instructions causes the device to, in selecting the at least one candidate anchor UE, select, via the at least one processor, a candidate anchor UE as an anchor UE based on the one or more position measurements and measurement quality metrics.

37. The computer-readable medium of clause 27, where execution of the instructions causes the device to determine, via the at least one processor, a variability of the measurement quality metrics for the plurality of candidate anchor UEs, where selecting the at least one candidate anchor UE is based on the determined variability.

38. The computer-readable medium of one or more of clauses 27-37, where the variability includes a mean and a variance of the measurement quality metrics.

39. The computer-readable medium of clause 27, where selecting the at least one candidate anchor UE is also based on a link quality of a sidelink (SL) between the target UE and the one or more candidate anchor UEs.

40. A device for selecting an anchor user equipment (UE) for positioning of a target UE in a wireless network, including:

means for obtaining, from one or more of a plurality of candidate anchor UEs, one or more position measurements and a measurement quality metric of each of the one or more position measurements of the candidate anchor UE; and
means for selecting at least one candidate anchor UE from the plurality of candidate anchor UEs for positioning of the target UE based on the one or more measurement quality metrics from the one or more candidate anchor UEs.

41. The device of clause 40, where the means for obtaining the one or more position measurements and measurement quality metrics of a candidate anchor UE includes means for obtaining the one or more position measurements and measurement quality metrics of the candidate anchor UE in one or more NR-based positioning measurement reports from the candidate anchor UE.

42. The device of one or more of clauses 40-41, where the one or more position measurements includes one or more reference signal time differences (RSTDs) measured by the candidate anchor UE using positioning reference signal (PRS) resources obtained from one or more devices in the wireless network.

43. The device of one or more of clauses 40-42, where:

UE-based positioning is to be performed by the target UE; and
the one or more positioning measurement reports are to be obtained by the target UE from the candidate anchor UE via a sidelink (SL) between the target UE and the candidate anchor UE.

44. The device of one or more of clauses 40-43, further including means for providing, by the target UE, one or more of the PRS resources to the candidate anchor UE via the SL.

45. The device of one or more of clauses 40-42, where:

UE-assisted positioning for the target UE is to be performed by a location server of the wireless network;
one or more of the PRS resources are to be provided by a base station on a downlink (DL) to the candidate anchor UE;
the one or more positioning measurement reports are to be provided from a candidate anchor UE to the base station;
the one or more position measurements and measurement quality metrics from the one or more positioning measurement reports are to be provided from the base station to the location server; and
the means for selecting the at least one candidate anchor UE includes means of the location server for selecting a candidate anchor UE as an anchor UE based on the one or more position measurements and measurement quality metrics.

46. The device of clause 40, where, for the one or more candidate anchor UEs, each position measurement and associated measurement quality metric is radio access technology (RAT) independent.

47. The device of one or more of clauses 40-46, where each position measurement and associated measurement quality metric is to be determined by the candidate anchor UE using a global navigation satellite system (GNSS).

48. The device of one or more of clauses 40-46, where:

UE-based positioning is to be performed by the target UE; and
the one or more position measurements and measurement quality metrics of a candidate anchor UE are to be obtained from the candidate anchor UE via a sidelink (SL) between the target UE and the candidate anchor UE.

49. The device of one or more of clauses 40-46, where:

UE-assisted positioning of the target UE is to be performed by a location server of the wireless network;
the one or more position measurements and metric quality metrics are to be provided from a candidate anchor UE to a base station;
the one or more position measurements and measurement quality metrics are to be provided from the base station to the location server; and
the means for selecting the at least one candidate anchor UE includes means of the location server for selecting a candidate anchor UE as an anchor UE based on the one or more position measurements and measurement quality metrics.

50. The device of clause 40, further including means for determining a variability of the measurement quality metrics for the plurality of candidate anchor UEs, where selecting the at least one candidate anchor UE is based on the determined variability.

51. The device of one or more of clauses 40-50, where the variability includes a mean and a variance of the measurement quality metrics.

52. The device of clause 40, where selecting the at least one candidate anchor UE is also based on a link quality of a sidelink (SL) between the target UE and the one or more candidate anchor UEs.

53. A method of selecting an anchor user equipment (UE) for positioning of a target UE in a wireless network, including:

obtaining, for one or more of a plurality of candidate anchor UEs, a mobility status of the candidate anchor UE; and
selecting at least one candidate anchor UE from the plurality of candidate anchor UEs for positioning of the target UE based on the one or more mobility statuses.

54. The method of clause 53, where obtaining the mobility status of the candidate anchor UE includes obtaining the mobility status from the candidate anchor UE, where the mobility status is determined by the candidate anchor UE.

55. The method of one or more of clauses 53-54, where the mobility status determined by the candidate anchor UE is radio access technology (RAT) dependent.

56. The method of one or more of clauses 53-54, where the mobility status determined by the candidate anchor UE is radio access technology (RAT) independent.

57. The method of one or more of clauses 53-56, where the mobility status is determined by the candidate anchor UE using an inertial measurement unit (IMU).

58. The method of one or more of clauses 53-54, where the mobility status is provided periodically by the candidate anchor UE.

59. The method of one or more of clauses 53-54, where the mobility status is provided by the candidate anchor UE when the mobility status is greater than a mobility threshold.

60. The method of one or more of clauses 53-54, where:

UE-based positioning is to be performed by the target UE; and
the mobility status is obtained by the target UE from the candidate anchor UE via a sidelink (SL) between the target UE and the candidate anchor UE.

61. The method of clause 53, where obtaining the mobility status of the candidate anchor UE includes determining the mobility status from a position history of the candidate anchor UE.

62. The method of one or more of clauses 53-61, where:

UE-assisted positioning of the target UE is to be performed by a location server of the wireless network; and
the position history of the candidate anchor UE is determined by the location server from one or more reports from the candidate anchor UE.

63. The method of clause 53, where the mobility status of a candidate anchor UE includes a speed of the candidate anchor UE.

64. A device configured for selecting an anchor user equipment (UE) for positioning of a target UE in a wireless network, including:

at least one transceiver;
at least one memory; and
at least one processor coupled to the at least one transceiver and the at least one memory, where the at least one processor is configured to cause the device to:

obtain, via one or more of the at least one transceiver or the at least one processor and for one or more of a plurality of candidate anchor UEs, a mobility status of the candidate anchor UE; and
select, via the at least one processor, at least one candidate anchor UE from the plurality of candidate anchor UEs for positioning of the target UE based on the one or more mobility statuses.

65. The device of clause 64, where, to obtain the mobility status of the candidate anchor UE, the at least one processor is configured to cause the device to obtain, via the at least one transceiver, the mobility status from the candidate anchor UE, where the mobility status is to be determined by the candidate anchor UE.

66. The device of one or more of clauses 64-65, where the mobility status to be determined by the candidate anchor UE is radio access technology (RAT) dependent.

67. The device of one or more of clauses 64-65, where the mobility status to be determined by the candidate anchor UE is radio access technology (RAT) independent.

68. The device of one or more of clauses 64-67, where the mobility status is to be determined by the candidate anchor UE using an inertial measurement unit (IMU).

69. The device of one or more of clauses 64-65, where the mobility status is to be periodically provided by the candidate anchor UE.

70. The device of one or more of clauses 64-65, where the mobility status is to be provided by the candidate anchor UE when the mobility status is greater than a mobility threshold.

71. The device of one or more of clauses 64-65, where:

the device is the target UE configured to perform UE-based positioning; and
the at least one processor is configured to cause the device to obtain, via the at least one transceiver, the mobility status from the candidate anchor UE via a sidelink (SL) between the target UE and the candidate anchor UE.

72. The device of clause 64, where, to obtain the mobility status of the candidate anchor UE, the at least one processor is configured to cause the device to determine, via the at least one processor, the mobility status from a position history of the candidate anchor UE.

73. The device of one or more of clauses 64-72, where:

the device is a location server of the wireless network configured to perform UE-assisted positioning of the target UE; and
the at least one processor is configured to cause the device to determine, via the at least one processor, the position history of the candidate anchor UE from one or more reports from the candidate anchor UE.

74. The device of clause 64, where the mobility status of a candidate anchor UE includes a speed of the candidate anchor UE.

75. A non-transitory computer-readable medium storing instructions that, when executed by at least one processor of a device for selecting an anchor user equipment (UE) for positioning of a target UE in a wireless network, causes the device to:

obtain, via one or more of at least one transceiver or the at least one processor and for one or more of a plurality of candidate anchor UEs, a mobility status of the candidate anchor UE; and
select, via the at least one processor, at least one candidate anchor UE from the plurality of candidate anchor UEs for positioning of the target UE based on the one or more mobility statuses.

76. The computer-readable medium of clause 75, where execution of the instructions causes the device to, in obtaining the mobility status of the candidate anchor UE, to obtain, via the at least one transceiver, the mobility status from the candidate anchor UE, where the mobility status is to be determined by the candidate anchor UE.

77. The computer-readable medium of one or more of clauses 75-76, where the mobility status to be determined by the candidate anchor UE is radio access technology (RAT) dependent.

78. The computer-readable medium of one or more of clauses 75-76, where the mobility status to be determined by the candidate anchor UE is radio access technology (RAT) independent.

79. The computer-readable medium of one or more of clauses 75-78, where the mobility status is to be determined by the candidate anchor UE using an inertial measurement unit (IMU).

80. The computer-readable medium of one or more of clauses 75-76, where the mobility status is to be periodically provided by the candidate anchor UE.

81. The computer-readable medium of one or more of clauses 75-76, where the mobility status is to be provided by the candidate anchor UE when the mobility status is greater than a mobility threshold.

82. The computer-readable medium of one or more of clauses 75-76, where:

the device is the target UE configured to perform UE-based positioning; and

execution of the instructions causes the device to obtain, via the at least one transceiver, the mobility status from the candidate anchor UE via a sidelink (SL) between the target UE and the candidate anchor UE.

83. The computer-readable medium of clause 75, where execution of the instructions causes the device to, in obtaining the mobility status of the candidate anchor UE, determine, via the at least one processor, the mobility status from a position history of the candidate anchor UE.

84. The computer-readable medium of one or more of clauses 75-83, where:

the device is a location server of the wireless network configured to perform UE-assisted positioning of the target UE; and
execution of the instructions causes the device to determine, via the at least one processor, the position history of the candidate anchor UE from one or more reports from the candidate anchor UE.

85. The computer-readable medium of clause 75, where the mobility status of a candidate anchor UE includes a speed of the candidate anchor UE.

86. A device for selecting an anchor user equipment (UE) for positioning of a target UE in a wireless network, including:

means for obtaining, for one or more of a plurality of candidate anchor UEs, a mobility status of the candidate anchor UE; and
means for selecting at least one candidate anchor UE from the plurality of candidate anchor UEs for positioning of the target UE based on the one or more mobility statuses.

87. The device of clause 86, where the means for obtaining the mobility status of the candidate anchor UE includes means for obtaining the mobility status from the candidate anchor UE, where the mobility status is to be determined by the candidate anchor UE.

88. The device of one or more of clauses 86-87, where the mobility status to be determined by the candidate anchor UE is radio access technology (RAT) dependent.

89. The device of one or more of clauses 86-87, where the mobility status to be determined by the candidate anchor UE is radio access technology (RAT) independent.

90. The device of one or more of clauses 86-89, where the mobility status is to be determined by the candidate anchor UE using an inertial measurement unit (IMU).

91. The device of one or more of clauses 86-87, where the mobility status is to be provided periodically by the candidate anchor UE.

92. The device of one or more of clauses 86-87, where the mobility status is to be provided by the candidate anchor UE when the mobility status is greater than a mobility threshold.

93. The device of one or more of clauses 86-87, where:

UE-based positioning is to be performed by the target UE; and
the mobility status is to be obtained by the target UE from the candidate anchor UE via a sidelink (SL) between the target UE and the candidate anchor UE.

94. The device of one or more of clauses 86-86, where the means for obtaining the mobility status of the candidate anchor UE includes means for determining the mobility status from a position history of the candidate anchor UE.

95. The device of one or more of clauses 86-94, where:

UE-assisted positioning of the target UE is to be performed by a location server of the wireless network; and
the position history of the candidate anchor UE is to be determined by the location server from one or more reports from the candidate anchor UE.

96. The device of clause 86, where the mobility status of a candidate anchor UE includes a speed of the candidate anchor UE.

97. A method of selecting an anchor user equipment (UE) for positioning of a target UE in a wireless network, including:

obtaining information associated with a plurality of geometric dilution of precisions (GDOPs), where each GDOP is determined for a different combination of candidate anchor UEs for a target UE from a plurality of candidate anchor UEs; and
selecting one or more anchor UEs for positioning of the target UE from the plurality of candidate anchor UEs, where the selection is based on the obtained information.

98. The method of clause 97, where UE-assisted positioning is to be performed by a location server of the wireless network.

99. The method of one or more of clauses 97-98, where obtaining the information associated with the plurality of GDOPs includes obtaining the plurality of GDOPs from a base station, where:
the plurality of GDOPs is obtained by the base station from one of:

the target UE; or
a relay UE between the base station and the target UE; and
selection, by the location server, of the one or more anchor UEs for positioning of the target UE is based on the plurality of GDOPs obtained from the base station.

100. The method of one or more of clauses 97-98, where obtaining the information associated with the plurality of GDOPs includes obtaining an indication of one or more preferred anchor UEs for the target UE from a base station, where:

the one or more preferred anchor UEs are determined by the target UE based on the plurality of GDOPs;
the indication of the one or more preferred anchor UEs is provided by the target UE to one of:

the base station; or
a relay UE between the base station and the target UE; and
selection, by the location server, of the one or more anchor UEs for positioning of the target UE is based on the indication of the one or more preferred anchor UEs.

101. The method of one or more of clauses 97-98, where selection, by the location server, of the one or more anchor UEs for positioning of the target UE is also based on a selection of anchor UEs for positioning of one or more UEs other than the target UE.

102. The method of clause 97, where obtaining the information associated with the plurality of GDOPs includes determining the plurality of GDOPs by the target UE, where UE-based positioning is to be performed by the target UE.

103. A device configured for selecting an anchor user equipment (UE) for positioning of a target UE in a wireless network, including:

at least one transceiver;
at least one memory; and
at least one processor coupled to the at least one transceiver and the at least one memory, where the at least one processor is configured to cause the device to:

obtain, via one or more of the at least one transceiver or the at least one processor, information associated with a plurality of geometric dilution of precisions (GDOPs), where each GDOP is determined for a different combination of candidate anchor UEs for a target UE from a plurality of candidate anchor UEs; and
select, via one or more of the at least one transceiver or the at least one processor, one or more anchor UEs for positioning of the target UE from the plurality of candidate anchor UEs, where the selection is based on the obtained information.

104. The device of clause 103, where the device is a location server of the wireless network configured to perform UE-assisted positioning.

105. The device of one or more of clauses 103-104, where, to obtain the information associated with the plurality of GDOPs, the at least one processor is configured to cause the device to:
obtain, via the at least one transceiver, the plurality of GDOPs from a base station, where the plurality of GDOPs is to be obtained by the base station from one of:

the target UE; or
a relay UE between the base station and the target UE;
where selection, via the at least one processor, of the one or more anchor UEs for positioning of the target UE is based on the plurality of GDOPs obtained from the base station.

106. The device of one or more of clauses 103-104, where, to obtain the information associated with the plurality of GDOPs, the at least one processor is configured to cause the device to:
obtain, via the at least one transceiver, an indication of one or more preferred anchor UEs for the target UE from a base station, where:

the one or more preferred anchor UEs are to be determined by the target UE based on the plurality of GDOPs;
the indication of the one or more preferred anchor UEs is to be provided by the target UE to one of:

the base station; or
a relay UE between the base station and the target UE; and
selection, via the at least one processor, of the one or more anchor UEs for positioning of the target UE is based on the indication of the one or more preferred anchor UEs.

107. The device of one or more of clauses 103-104, where selection of the one or more anchor UEs for positioning of the target UE is also based on a selection of anchor UEs for positioning of one or more UEs other than the target UE.

108. The device of clause 103, where the device is the target UE configured to perform UE-based positioning, where, to obtain the information associated with the plurality of GDOPs, the at least one processor is configured to cause the device to determine, via the at least one processor, the plurality of GDOPs.

109. A non-transitory computer-readable medium including instructions that, when executed by at least one processor of a device configured for selecting an anchor user equipment (UE) for positioning of a target UE in a wireless network, causes the device to:

obtain, via one or more of the at least one transceiver or the at least one processor, information associated with a plurality of geometric dilution of precisions (GDOPs), where each GDOP is determined for a different combination of candidate anchor UEs for a target UE from a plurality of candidate anchor UEs; and
select, via one or more of at least one transceiver or the at least one processor, one or more anchor UEs for positioning of the target UE from a plurality of candidate anchor UEs, where the selection is based on the obtained information.

110. The computer-readable medium of clause 109, where the device is a location server of the wireless network configured to perform UE-assisted positioning.

111. The computer-readable medium of one or more of clauses 109-110, where execution of the instructions causes the device, in obtaining the information associated with the plurality of GDOPs, to:
obtain, via the at least one transceiver, the plurality of GDOPs from a base station, where the plurality of GDOPs is to be obtained by the base station from one of:

the target UE; or
a relay UE between the base station and the target UE;
where selection, via the at least one processor, of the one or more anchor UEs for positioning of the target UE is based on the plurality of GDOPs obtained from the base station.

112. The computer-readable medium of one or more of clauses 109-110, where execution of the instruction causes the device, in obtaining the information associated with the plurality of GDOPs, to:

obtain, via the at least one transceiver, an indication of one or more preferred anchor UEs for the target UE from a base station, where:

the one or more preferred anchor UEs are to be determined by the target UE based on the plurality of GDOPs;
the indication of the one or more preferred anchor UEs is to be provided by the target UE to one of:

the base station; or
a relay UE between the base station and the target UE; and
selection, via the at least one processor, of the one or more anchor UEs for positioning of the target UE is based on the indication of the one or more preferred anchor UEs.

113. The computer-readable medium of one or more of clauses 109-110, where selection of the one or more anchor UEs for positioning of the target UE is also based on a selection of anchor UEs for positioning of one or more UEs other than the target UE.

114. The computer-readable medium of clause 109, where the device is the target UE configured to perform UE-based positioning, where execution of the instructions causes the device, in obtaining the information associated with the plurality of GDOPs, to determine, via the at least one processor, the plurality of GDOPs.

115. A device for selecting an anchor user equipment (UE) for positioning of a target UE in a wireless network, including:

means for obtaining information associated with a plurality of geometric dilution of precisions (GDOPs), where each GDOP is determined for a different combination of candidate anchor UEs for a target UE from a plurality of candidate anchor UEs; and
means for selecting one or more anchor UEs for positioning of the target UE from a plurality of candidate anchor UEs, where the selection is based on the obtained information.

116. The device of clause 115, where UE-assisted positioning is to be performed by a location server of the wireless network.

117. The device of one or more of clauses 115-116, where the means for obtaining the information associated with the plurality of GDOPs includes means for obtaining the plurality of GDOPs from a base station, where:
the plurality of GDOPs is to be obtained by the base station from one of:

the target UE; or
a relay UE between the base station and the target UE; and
selection, by the location server, of the one or more anchor UEs for positioning of the target UE is based on the plurality of GDOPs obtained from the base station.

118. The device of one or more of clauses 115-116, where the means for obtaining the information associated with the plurality of GDOPs includes means for obtaining an indication of one or more preferred anchor UEs for the target UE from a base station, where:

the one or more preferred anchor UEs are to be determined by the target UE based on the plurality of GDOPs;
the indication of the one or more preferred anchor UEs is to be provided by the target UE to one of:

the base station; or
a relay UE between the base station and the target UE; and
selection, by the location server, of the one or more anchor UEs for positioning of the target UE is based on the indication of the one or more preferred anchor UEs.

119. The device of one or more of clauses 115-116, where selection, by the location server, of the one or more anchor UEs for positioning of the target UE is also based on a selection of anchor UEs for positioning of one or more UEs other than the target UE.

120. The device of clause 115, where the means for obtaining the information associated with the plurality of GDOPs includes means for determining the plurality of GDOPs by the target UE, where UE-based positioning is to be performed by the target UE.

121. A method of selecting an anchor user equipment (UE) for positioning of a target UE in a wireless network, including:

obtaining information associated with one or more of:

position measurements and measurement quality metrics of one or more candidate anchor UEs;
mobility statuses for one or more candidate anchor UEs; or
geometric dilution of precisions (GDOPs) associated with one or more candidate anchor UEs; and

selecting at least one candidate anchor UE from a plurality of candidate anchor UEs for positioning of a target UE based on the obtained information.

122. The method of clause 121, where obtaining the information includes obtaining, from one or more of the plurality of candidate anchor UEs, one or more position measurements and a measurement quality metric of each of the one or more position measurements of the candidate anchor UE.

123. The method of one or more of clauses 121-122, where obtaining the information includes obtaining, for one or more of the plurality of candidate anchor UEs, a mobility status of the candidate anchor UE.

124. The method of one or more of clauses 121-123, where obtaining the information includes obtaining information associated with a plurality of GDOPs, where each GDOP is determined for a different combination of candidate anchor UEs for the target UE from the plurality of candidate anchor UEs.

125. A device configured for selecting an anchor user equipment (UE) for positioning of a target UE in a wireless network, including:

at least one transceiver;
at least one memory; and
at least one processor coupled to the at least one transceiver and the at least one memory, where the at least one processor is configured to cause the device to:

obtain information associated with one or more of:

position measurements and measurement quality metrics of one or more candidate anchor UEs;
mobility statuses for one or more candidate anchor UEs; or
geometric dilution of precisions (GDOPs) associated with one or more candidate anchor UEs; and

select at least one candidate anchor UE from a plurality of candidate anchor UEs for positioning of a target UE based on the obtained information.

126. The device of clause 125, where, to obtain the information, the at least one processor is configured to cause the device to obtain, from one or more of the plurality of candidate anchor UEs, one or more position measurements and a measurement quality metric of each of the one or more position measurements of the candidate anchor UE.

127. The device of one or more of clauses 125-126, where, to obtain the information, the at least one processor is configured to cause the device to obtain, for one or more of the plurality of candidate anchor UEs, a mobility status of the candidate anchor UE.

128. The device of one or more of clauses 125-126, where, to obtain the information, the at least one processor is configured to cause the device to obtain information associated with a plurality of GDOPs, where each GDOP is determined for a different combination of candidate anchor UEs for the target UE from the plurality of candidate anchor UEs.

129. A non-transitory computer-readable medium including instructions that, when executed by at least one processor of a device configured for selecting an anchor user equipment (UE) for positioning of a target UE in a wireless network, causes the device to:

obtain information associated with one or more of:

position measurements and measurement quality metrics of one or more candidate anchor UEs;
mobility statuses for one or more candidate anchor UEs; or
geometric dilution of precisions (GDOPs) associated with one or more candidate anchor UEs; and

select at least one candidate anchor UE from a plurality of candidate anchor UEs for positioning of a target UE based on the obtained information.

130. The computer-readable medium of clause 129, where execution of the instructions causes the device, in obtaining the information, to obtain, from one or more of the plurality of candidate anchor UEs, one or more position measurements and a measurement quality metric of each of the one or more position measurements of the candidate anchor UE.

131. The computer-readable medium of one or more of clauses 129-130, where execution of the instructions causes the device, in obtaining the information, to obtain, for one or more of the plurality of candidate anchor UEs, a mobility status of the candidate anchor UE.

132. The computer-readable medium of one or more of clauses 129-131, where execution of the instructions causes the device, in obtaining the information, to obtain information associated with a plurality of GDOPs, where each GDOP is determined for a different combination of candidate anchor UEs for the target UE from the plurality of candidate anchor UEs.

133. A device configured for selecting an anchor user equipment (UE) for positioning of a target UE in a wireless network, including:

means for obtaining information associated with one or more of:

position measurements and measurement quality metrics of one or more candidate anchor UEs;
mobility statuses for one or more candidate anchor UEs; or
geometric dilution of precisions (GDOPs) associated with one or more candidate anchor UEs; and

means for selecting at least one candidate anchor UE from a plurality of candidate anchor UEs for positioning of a target UE based on the obtained information.

134. The device of clause 133, where the means for obtaining the information includes means for obtaining, from one or more of the plurality of candidate anchor UEs, one or more position measurements and a measurement quality metric of each of the one or more position measurements of the candidate anchor UE.

135. The device of one or more of clauses 133-134, where the means for obtaining the information includes means for obtaining, for one or more of the plurality of candidate anchor UEs, a mobility status of the candidate anchor UE.

136. The device of one or more of clauses 133-135, where the means for obtaining the information includes means for obtaining information associated with a plurality of GDOPs, where each GDOP is determined for a different combination of candidate anchor UEs for the target UE from the plurality of candidate anchor UEs.

Therefore, it is intended that claimed subject matter not be limited to the particular examples disclosed, but that such claimed subject matter may also include all aspects falling within the scope of appended claims, and equivalents thereof.

## Claims

1. A method (1000) of selecting an anchor user equipment, UE, for positioning of a target UE in a wireless network, comprising:

obtaining (1002) information associated with a plurality of geometric dilution of precisions, GDOPs, where each GDOP is determined for a different combination of candidate anchor UEs for a target UE from a plurality of candidate anchor UEs; and

selecting (1004) one or more anchor UEs for positioning of the target UE from the plurality of candidate anchor UEs, where the selection is based on the obtained information.

2. The method of claim 1, wherein UE-assisted positioning is to be performed by a location server of the wireless network.

3. The method of claim 1 or 2, wherein obtaining the information associated with the plurality of GDOPs comprises obtaining the plurality of GDOPs from a base station, wherein:

the plurality of GDOPs is obtained by the base station from one of:

the target UE; or
a relay UE between the base station and the target UE; and

selection, by the location server, of the one or more anchor UEs for positioning of the target UE is based on the plurality of GDOPs obtained from the base station.

4. The method of claim 1 or 2, wherein obtaining the information associated with the plurality of GDOPs comprises obtaining an indication of one or more preferred anchor UEs for the target UE from a base station, wherein:

the one or more preferred anchor UEs are determined by the target UE based on the plurality of GDOPs;
the indication of the one or more preferred anchor UEs is provided by the target UE to one of:

the base station; or
a relay UE between the base station and the target UE; and

selection, by the location server, of the one or more anchor UEs for positioning of the target UE is based on the indication of the one or more preferred anchor UEs.

5. The method of claim 1 or 2, wherein selection, by the location server, of the one or more anchor UEs for positioning of the target UE is also based on a selection of anchor UEs for positioning of one or more UEs other than the target UE.

6. The method of claim 1, wherein obtaining the information associated with the plurality of GDOPs comprises determining the plurality of GDOPs by the target UE, wherein UE-based positioning is to be performed by the target UE.

7. A device configured for selecting an anchor user equipment, UE, for positioning of a target UE in a wireless network, comprising:

at least one transceiver;
at least one memory; and
at least one processor coupled to the at least one transceiver and the at least one memory, wherein the at least one processor is configured to cause the device to:

obtain (1002), via one or more of the at least one transceiver or the at least one processor, information associated with a plurality of geometric dilution of precisions, GDOPs, wherein each GDOP is determined for a different combination of candidate anchor UEs for a target UE from a plurality of candidate anchor UEs; and
select (1004), via one or more of the at least one transceiver or the at least one processor, one or more anchor UEs for positioning of the target UE from the plurality of candidate anchor UEs, wherein the selection is based on the obtained information.

8. The device of claim 7, wherein the device is a location server of the wireless network configured to perform UE-assisted positioning.

9. The device of claim 7 or 8, wherein, to obtain the information associated with the plurality of GDOPs, the at least one processor is configured to cause the device to:

obtain, via the at least one transceiver, the plurality of GDOPs from a base station, wherein the plurality of GDOPs is to be obtained by the base station from one of:

> the target UE; or
> a relay UE between the base station and the target UE;

> wherein selection, via the at least one processor, of the one or more anchor UEs for positioning of the target UE is based on the plurality of GDOPs obtained from the base station.

10. The device of claim 7 or 8, wherein, to obtain the information associated with the plurality of GDOPs, the at least one processor is configured to cause the device to:
obtain, via the at least one transceiver, an indication of one or more preferred anchor UEs for the target UE from a base station, wherein:

> the one or more preferred anchor UEs are to be determined by the target UE based on the plurality of GDOPs;
> the indication of the one or more preferred anchor UEs is to be provided by the target UE to one of:

> > the base station; or
> > a relay UE between the base station and the target UE; and

> selection, via the at least one processor, of the one or more anchor UEs for positioning of the target UE is based on the indication of the one or more preferred anchor UEs.

11. The device of claim 7 or 8, wherein selection of the one or more anchor UEs for positioning of the target UE is also based on a selection of anchor UEs for positioning of one or more UEs other than the target UE.

12. The device of claim 7, wherein the device is the target UE configured to perform UE-based positioning, wherein, to obtain the information associated with the plurality of GDOPs, the at least one processor is configured to cause the device to determine, via the at least one processor, the plurality of GDOPs.

13. A non-transitory computer-readable medium including instructions that, when executed by at least one processor of a device configured for selecting an anchor user equipment, UE, for positioning of a target UE in a wireless network, causes the device to:

> obtain (1002), via one or more of the at least one transceiver or the at least one processor, information associated with a plurality of geometric dilution of precisions, GDOPs, wherein each GDOP is determined for a different combination of candidate anchor UEs for a target UE from a plurality of candidate anchor UEs; and
> select (1004), via one or more of at least one transceiver or the at least one processor, one or more anchor UEs for positioning of the target UE from a plurality of candidate anchor UEs, wherein the selection is based on the obtained information.

14. The computer-readable medium of claim 13, wherein the device is a location server of the wireless network configured to perform UE-assisted positioning.

15. The computer-readable medium of claim 13 or 14, wherein execution of the instructions causes the device, in obtaining the information associated with the plurality of GDOPs, to:

> obtain, via the at least one transceiver, the plurality of GDOPs from a base station, wherein the plurality of GDOPs is to be obtained by the base station from one of:

> > the target UE; or
> > a relay UE between the base station and the target UE;

> wherein selection, via the at least one processor, of the one or more anchor UEs for positioning of the target UE is based on the plurality of GDOPs obtained from the base station.

FIG. 1

*FIG. 2*

EP 4 411 409 A2

*FIG. 3*

*FIG. 4*

*FIG. 5*

*FIG. 6*

700

702

Obtain, from one or more of a plurality of candidate anchor user equipments (UEs), one or more position measurements and a measurement quality metric of each of the one or more position measurements of the candidate anchor UE.

704

Select at least one candidate anchor UE from the plurality of candidate anchor UEs for positioning of the target UE based on the one or more measurement quality metrics from the one or more candidate anchor UEs.

*FIG. 7*

800

802

Obtain, for one or more of a plurality of candidate anchor user equipments (UEs), a mobility status of the candidate anchor UE.

804

Select at least one candidate anchor UE from the plurality of candidate anchor UEs for positioning of the target UE based on the one or more mobility statuses.

*FIG. 8*

900

Range
906

902

TRP₁

904

TRP₂

Position
Uncertainty
910A

Range
908

*FIG. 9A*

FIG. 9B

1000 —

1002

Obtain information associated with a plurality of geometric dilution of precisions (GDOPs), wherein each GDOP is determined for a different combination of candidate anchor user equipments (UEs) for a target UE from a plurality of candidate anchor UEs.

1004

Select one or more anchor UEs for positioning of the target UE from the plurality of candidate anchor UEs, wherein the selection is based on the obtained information.

*FIG. 10*

1100 ⟋

┌─────────────────────────────────────────────────────────────┐ ⟋1102
│                                                             │
│   Obtain information associated with one or more of: position │
│   measurements and measurement quality metrics from one or more │
│   candidate anchor user equipments (UEs); mobility statuses for one or │
│   more candidate anchor UEs; or geometric dilution of precisions │
│   (GDOPs) associated with one or more candidate anchor UEs.  │
│                                                             │
│                                              ⟋1104          │
│   ┌ ─ ─ ─ ─ ─ ─ ─ ─ ─ ─ ─ ─ ─ ─ ─ ─ ─ ─ ─ ─ ─ ─ ─ ─ ─ ┐  │
│   │ Obtain, from one or more of a plurality of candidate anchor UEs, one │ │
│   │ or more position measurements and a measurement quality metric of │ │
│   │ each of the one or more position measurements of the candidate │  │
│   │              anchor UE.                                │  │
│   └ ─ ─ ─ ─ ─ ─ ─ ─ ─ ─ ─ ─ ─ ─ ─ ─ ─ ─ ─ ─ ─ ─ ─ ─ ─ ┘  │
│                                              ⟋1106          │
│   ┌ ─ ─ ─ ─ ─ ─ ─ ─ ─ ─ ─ ─ ─ ─ ─ ─ ─ ─ ─ ─ ─ ─ ─ ─ ─ ┐  │
│   │                                                     │  │
│   │ Obtain, for one or more of the plurality of candidate anchor UEs, a │ │
│   │         mobility status of the candidate anchor UE.   │  │
│   │                                                     │  │
│   └ ─ ─ ─ ─ ─ ─ ─ ─ ─ ─ ─ ─ ─ ─ ─ ─ ─ ─ ─ ─ ─ ─ ─ ─ ─ ┘  │
│                                              ⟋1108          │
│   ┌ ─ ─ ─ ─ ─ ─ ─ ─ ─ ─ ─ ─ ─ ─ ─ ─ ─ ─ ─ ─ ─ ─ ─ ─ ─ ┐  │
│   │                                                     │  │
│   │ Obtain information associated with a plurality of GDOPs, wherein │ │
│   │ each GDOP is determined for a different combination of candidate │ │
│   │ anchor UEs for a target UE from the plurality of candidate anchor │ │
│   │              UEs.                                     │  │
│   │                                                     │  │
│   └ ─ ─ ─ ─ ─ ─ ─ ─ ─ ─ ─ ─ ─ ─ ─ ─ ─ ─ ─ ─ ─ ─ ─ ─ ─ ┘  │
│                                                             │
└─────────────────────────────────────────────────────────────┘

                            │
                            ▼
┌─────────────────────────────────────────────────────────────┐ ⟋1110
│                                                             │
│   Select at least one candidate anchor UE from a plurality of candidate │
│   anchor UEs for positioning of a target UE based on the obtained │
│                       information.                          │
│                                                             │
└─────────────────────────────────────────────────────────────┘

*FIG. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical layer; Measurements. *3GPP TS 36.214*